(19) Europäisches Patentamt
European Patent Office
Office européen des brevets

(11) EP 1 295 113 B1

(12) **FASCICULE DE BREVET EUROPEEN**

(45) Date de publication et mention de la délivrance du brevet:
**26.07.2006 Bulletin 2006/30**

(21) Numéro de dépôt: **01949600.9**

(22) Date de dépôt: **29.06.2001**

(51) Int Cl.:
***G01N 27/447*** *(2006.01)*

(86) Numéro de dépôt international:
**PCT/FR2001/002103**

(87) Numéro de publication internationale:
**WO 2002/001218 (03.01.2002 Gazette 2002/01)**

(54) **MILIEU LIQUIDE NON-THERMOSENSIBLE POUR L'ANALYSE D'ESPECES AU SEIN D'UN CANAL**

FLÜSSIGES NICHTTHERMOSENSIBLES MEDIUM FÜR DIE ANALYSE VON SPEZIEN IN EINEM KANAL

NON-THERMOSENSITIVE MEDIUM FOR ANALYSING SPECIES INSIDE A CHANNEL

(84) Etats contractants désignés:
**AT BE CH CY DE DK ES FI FR GB GR IE IT LI LU MC NL PT SE TR**

(30) Priorité: **30.06.2000 FR 0008526**

(43) Date de publication de la demande:
**26.03.2003 Bulletin 2003/13**

(73) Titulaires:
- **Institut Curie**
  **75248 Paris Cedex 05 (FR)**
- **CENTRE NATIONAL DE LA RECHERCHE SCIENTIFIQUE (CNRS)**
  **75016 Paris (FR)**

(72) Inventeurs:
- **VIOVY, Jean-Louis**
  **F-75013 Paris (FR)**
- **BARBIER, Valessa**
  **38100 Grenoble (FR)**

(74) Mandataire: **Le Coupanec, Pascale A.M.P. et al**
**Nony & Associés,**
**3 rue de Penthièvre**
**75008 Paris (FR)**

(56) Documents cités:

| | |
|---|---|
| **EP-A- 0 339 678** | **WO-A-94/10561** |
| **WO-A-97/45721** | **WO-A2-02/00746** |
| **US-A- 5 290 418** | **US-A- 5 468 365** |
| **US-A- 5 759 369** | **US-A- 5 891 313** |

- **AOKI T. ET AL: 'Thermosensitive Phase-Separation Behavior of Poly(acrylic acid)-graft-poly(N,N-dimethylacrylamide) Aqueous Solution' MACROMOLECULES vol. 33, 31 Décembre 1999, pages 444 - 450**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne le domaine des techniques d'analyse, de séparation et de purification d'espèces, selon lesquelles il est nécessaire de faire migrer ces espèces au sein d'un fluide appelé « milieu de séparation ».

Elle vise plus particulièrement à proposer un milieu de séparation approprié à la séparation d'espèces dans des canaux ou des capillaires dont l'une des dimensions au moins est submillimétrique, et typiquement comprise entre 20 $\mu$m et 200 $\mu$m (appelés dans la suite microcanaux). Il s'agit en particulier de méthodes de séparation ou d'analyse de macromolécules biologiques par électrophorèse capillaire, par chromatographie, ou par toute méthode mise en jeu dans des microcanaux (électrophorèse et chromatographie capillaires, systèmes microfluidiques, "laboratoires sur puces"). L'invention est particulièrement utile dans le cas de l'électrophorèse.

Dans ce qui suit, on désignera par "système "microfluidique", tout système dans lequel des fluides et/ou des espèces contenues dans un fluide sont mus au sein d'un canal ou d'un ensemble de canaux dont l'une des dimensions au moins est submillimétrique, et on désignera par électrophorèse capillaire (EC) les systèmes microfluidiques dans lesquels le transport des espèces s'effectue sous l'action d'un champ électrique.

L'EC et les systèmes microfluidiques permettent des séparations plus rapides et plus résolutives que les méthodes plus anciennes d'électrophorèse sur gel, ne réclament pas de milieu anticonvectif, et leurs propriétés ont été utilisées largement pour effectuer des séparations d'ions en milieu liquide. A l'heure actuelle, la grande majorité des séparations de macromolécules biologiques effectuées en EC ont recours à des solutions de polymères hydrosolubles linéaires enchevêtrés présentant l'avantage de pouvoir être remplacées aussi souvent que nécessaire.

De nombreux polymères non réticulés ont été proposés comme milieux pour la séparation d'espèces au sein d'un canal, en particulier dans le contexte de l'électrophorèse capillaire. Le choix du meilleur polymère pour une application donnée dépend de plusieurs paramètres. Pour la séparation d'analytes en fonction de leurs tailles par exemple, il faut que le milieu présente aux analytes des obstacles topologiques suffisamment résistants (Viovy et coll., Electrophoresis, 1993, 14, 322). Ceci implique que le milieu de séparation soit fortement enchevêtré, et donc assez visqueux. Il faut également que les polymères présents dans le milieu de séparation ne présentent pas d'interaction attractives avec les analytes. En effet, ce type d'interactions donne lieu à un retardement de certains analytes, et à une dispersion supplémentaire (H. Zhou et coll. HPCE 2000, Saarbrucken, 20-24/2/2000). Ainsi, il est bien connu que pour le séquençage de l'ADN, ou pour la séparation dé protéines, on obtient de moins bons résultats quand la matrice présente un caractère plus hydrophobe.

Il a également été proposé dans la littérature d'utiliser en tant que milieu de séparation des copolymères. Dans Menchen, WO 94/07133, il est proposé d'utiliser comme milieu de séparation en électrophorèse capillaire, des milieux comportant des copolymères de type copolymère bloc dits réguliers car présentant des segments hydrophiles d'une longueur sélectionnée et essentiellement uniforme et une pluralité de segments hydrophobes régulièrement espacés, à une concentration supérieure à la concentration de recouvrement entre polymères. Ces milieux présentent l'avantage d'être rhéofluidifiants, c'est à dire qu'ils peuvent être introduits dans un capillaire sous forte pression, tout en présentant en l'absence de pression extérieure des obstacles topologiques solides. Malheureusement, les milieux utilisables selon ce principe sont difficiles à synthétiser, ce qui les rend coûteux et limite le type de structures qui peut être envisagé. Egalement, ces polymères sont relativement hydrophobes, et leurs performances pour le séquençage de l'ADN par exemple, sont modestes.

Aoki *et coll.* (Macromolecules, 2000, 33, 444) décrivent des milieux non thermosensibles à base de polymère composé de plusieurs segments polymériques de type poly (N-isopropylacrylamide) greffé de poly(acide acrylique) ($PAA_c$-g- PDMAAm75) et de type poly($AA_c$-co- DMAAm) statistique.

Toutefois, l'utilisation de ces milieux pour la séparation d'espèces n'est pas décrite dans ce document.

Il a également été proposé d'utiliser en tant que milieu de séparation des milieux thermosensibles, dont la viscosité varie fortement au cours d'une élévation de température. Ce type de milieu a pour avantage de permettre l'injection dudit milieu dans le capillaire à une première température dans un état de faible viscosité, et la séparation à une seconde température dans un état de plus forte viscosité présentant de bonnes performances de séparation, comme cela est couramment effectué en électrophorèse en gel, en particulier avec l'agarose. Dans les demandes WO 94/10561 et WO 95/30782 sont notamment proposés des milieux permettant une injection plus facile par élévation de la température. En fait, sont essentiellement décrits dans ces demandes de brevet des microgels capables de diminuer de volume à haute température (conduisant ainsi à une solution diluée de particules discontinues de faible viscosité) et de se gonfler à basse température jusqu'à occuper entièrement le canal de séparation (conférant ainsi au milieu un caractère gélifié et de bonnes propriétés de séparation). La demande WO 98/10274 propose pour sa part un milieu de séparation moléculaire comportant au moins un type de copolymères blocs qui est en solution à une première température et dans un état de type gel à une seconde température. Les milieux décrits comprennent des polymères triblocs de faibles masses moléculaires (typiquement inférieures à 20 000), de la famille polyoxyethylène-polyoxypropylène-polyoxyéthylène (POE-POP-POE) et plus spécifiquement encore le ($POE_{99}$-$POP_{69}$-$POE_{99}$, où les indices représentent les nombres de monomères de chaque bloc) (nom commercial « Pluronic F127 »). A basse température, les deux segments POE

en extrémité des systèmes triblocs sont hydrosolubles, et étant donnée la faible masse moléculaire du copolymère, les solutions sont relativement peu visqueuses jusqu'à une concentration élevée. En élevant la température aux alentours de 15-25°C, le segment central POP central devient plus hydrophobe, et ces polymères s'associent pour constituer un état de type gel. Toutefois, ce mécanisme présente pour l'électrophorèse plusieurs inconvénients. D'une part, il ne donne lieu à un état gel doué de bonnes propriétés de séparation électrophorétique qu'à des concentrations en polymère importantes, supérieures à 15 g/100ml voire à 20g/100ml, ce qui conduit à une forte friction et à des temps de migration longs. Par ailleurs, la dépendance des propriétés en fonction de la vitesse de changement de température rend la reproductibilité des résultats aléatoire. Enfin, pour beaucoup d'applications et dans beaucoup d'appareils, il est peu commode, voire impossible, de changer la température entre la phase de remplissage du canal et la phase de séparation.

Dans Madabhushi, US 5, 552 028, WO 95/16910, WO 95/16911 il est également proposé d'utiliser des milieux de séparation comportant un milieu tamisant et un composant d'interaction de surface constitué par un polymère à propriétés d'adsorption aux parois, de masse moléculaire comprise entre 5 000 et 1 000 000, du type polymère d'acrylamide disubstitué. Ces matrices, et plus particulièrement le polydiméthylacrylamide (PDMA) permettent de réduire l'électroosmose et conduisent pour certaines applications, comme le séquençage, à de bonnes propriétés de séparation. Cependant, elles sont relativement hydrophobes, ce qui limite leurs performances pour certaines applications comme le séquençage de l'ADN, et est encore plus néfaste pour d'autres applications comme la séparation de protéines. Par ailleurs, elles conduisent à des séparations lentes.

En conséquence, malgré un grand nombre d'études et de systèmes proposés, on ne dispose pas à ce jour pour toutes les applications évoquées ci-dessus, d'un milieu qui soit optimal à la fois sur les différents aspects de coût, de performances de séparation, de réduction des interactions avec les parois et de commodité d'utilisation.

La présente invention a précisément pour objet de proposer l'utilisation d'une famille de polymères particulièrement avantageuse à titre de milieu de séparation liquide non thermosensible pour la séparation, l'analyse ou la purification d'espèces dans des canaux.

Plus particulièrement, la présente invention a pour objet un milieu liquide non-thermosensible pour l'analyse, la purification ou la séparation d'espèces au sein d'un canal, selon la revendication 1.

Au sens de l'invention, on entend désigner par "polymère" un produit constitué par un ensemble de macromolécules et caractérisé par certaines propriétés telles que masse moléculaire, polymolécularité, composition chimique et microstructure. La polymolécularité caractérise la distribution de masse moléculaire des macromolécules, au sens de la moyenne en masse familière aux hommes de l'art. Par microstructure, on entend la façon dont sont agencés au sein des macromolécules les monomères entrant dans leur composition chimique.

Selon l'invention, on entend par liquide et par opposition à un gel, tout milieu condensé capable d'écoulement, qu'il soit Newtonien ou viscoélastique.

En l'occurrence, sont exclus du domaine de l'invention, les gels dérivant de la copolymérisation de monomères en présence d'agent(s) de réticulation bifonctionnel(s) ou multifonctionnels. En effet, ces gels sont, compte tenu de leur état réticulé, solides ou élastiques et ne sont donc pas liquides. En particulier, ils ne se prêtent pas à une introduction dans un capillaire.

Le milieu liquide selon l'invention est non-thermosensible, c'est à dire qu'il ne présente pas, entre sa température de solidification plus 10 °C, et sa température d'ébullition moins 10°C, de changement brusque de sa viscosité. On entend par changement brusque, une variation de l'ordre d'un facteur 2 ou plus, sur une gamme de température de 20°C ou moins.

Au sens de l'invention, on entend couvrir sous l'expression méthode de séparation, toute méthode visant à séparer, purifier, identifier ou analyser, l'ensemble ou certaines des espèces contenues dans un échantillon. Le liquide est dans ce cas appelé "milieu de séparation", et est traversé par les espèces à séparer ou au moins certaines d'entre elles au cours du processus de séparation.

On entend désigner sous le terme "espèces" de manière générale des particules, organelles ou cellules, des molécules ou macromolécules, et en particulier des macromolécules biologiques comme les acides nucléiques (ADN, ARN, oligonucléotides), les analogues d'acides nucléiques obtenus par synthèse ou modification chimique, les protéines, les polypeptides, les glycopeptides et les polysaccharides. Dans les méthodes analytiques, lesdites espèces sont communément appelées " analytes ".

L'invention est particulièrement avantageuse dans le cas de méthodes de séparation électrocinétiques.

On entend couvrir sous l'expression séparation électrocinétique, toute méthode visant à séparer l'ensemble ou certaines des espèces contenues dans un mélange, en les faisant migrer au sein d'un milieu sous l'action d'un champ électrique, que le champ exerce son action motrice sur les analytes de façon directe ou indirecte, par exemple par l'intermédiaire d'un déplacement du milieu lui-même, comme dans l'électrochromatographie, ou d'un déplacement d'espèces annexes telles que des micelles, dans le cas de l'électrochromatographie micellaire, ou par n'importe quelle combinaison d'actions directes et indirectes. Sera également considérée comme une méthode de séparation électrocinétique selon l'invention toute méthode de séparation dans laquelle la dite action du champ électrique est combinée à une autre action motrice d'origine non-électrique. Sont de ce fait appelées « électrocinétiques », les méthodes d'électrophorèse capillaire ou d'électrophorèse sur "chips".

De façon avantageuse, en particulier dans le cas de séparations électrocinétique, le liquide sera constitué par un électrolyte.

Au sens de l'invention, on entend désigner par électrolyte, un liquide capable de conduire les ions. Dans le cas le plus courant, ce milieu est un milieu aqueux tamponné, comme les tampons à base de phosphate, de tris (hydroxymethyl)aminométhane (TRIS), de borate, de N-tris(hydroxymethyl)methyl-3-aminopropane sulfonic acid (TAPS), d'histidine, de lysine, etc... De nombreux exemples de tampons utilisables en électrophorèse sont connus de l'homme de l'art, et un certain nombre d'entre eux sont décrits par exemple dans " Sambrook et coll., " Molecular Cloning: a laboratory manual ", Cold Spring Harbor Lab, New York, 1989. Cependant, tous types d'électrolyte peuvent être utilisés dans le cadre de l'invention notamment les solvants hydroorganiques comme à titre d'exemple les mélanges eau-acétonitrile, eau-formamide ou eau-urée, les solvants organiques polaires tels que, encore à titre d'exemple, la N-methylformamide. Les électrolytes dits "tampons de séquençage", constitués par un tampon aqueux à pH alcalin additionné d'une proportion notable d'urée et/ou de formamide s'avèrent particulièrement utiles dans le cadre de l'invention.

On entend désigner par "canal" tout volume délimité par une ou plusieurs parois solides, présentant au moins deux orifices et destiné à contenir ou à être traversé par un fluide.

L'invention est particulièrement avantageuse dans les systèmes comportant au moins un canal dont une dimension au moins est de dimension submillimétrique, tels que les systèmes de séparation électrocinétique en capillaire, les systèmes microfluidiques, et plus généralement les systèmes pour la séparation d'espèces employant des microcanaux.

Selon une variante privilégiée, l'invention vise l'utilisation en tant que milieu de séparation liquide, d'une solution contenant des polymères présentant en moyenne au moins quatre points de jonction, de préférence un nombre de points de jonction compris entre 4 et 100, et plus préférentiellement un nombre de points de jonction compris entre 4 et 40.

Par point de jonction, on entend un point reliant soit deux segments polymériques de nature chimique significativement différente, comme dans le cas d'un copolymère-bloc; soit un point de réticulation entre un nombre de segments polymériques, de nature chimique identique ou différente, supérieur à deux, comme dans les polymères en peigne. A titre d'exemple, un polymère en peigne comportant trois branches latérales comporte trois points de jonction et sept segments polymériques distincts. De même, un copolymère-bloc séquencé de type A-B-A-B comporte trois points de jonction et quatre segments polymériques distincts.

Au titre de l'invention, on entend désigner par "segment polymérique" ou "segment" un ensemble de monomères liés entre eux de façon covalente et linéaire, et appartenant à un type donné de composition chimique, c'est à dire présentant globalement des propriétés physicochimiques spécifiques, en particulier en ce qui concerne la solvatation, l'interaction avec une paroi solide, une affinité spécifique vis-à-vis de certaines molécules, ou une combinaison de ces propriétés.

Un exemple de segment polymérique au sens de l'invention est donné par l'enchaînement au sein d'un copolymère, de monomères tous identiques (segment homopolymère), ou un copolymère ne présentant pas de corrélation de composition significative sur des distances de plus de quelques monomères (segment de type copolymère statistique). Le polymère selon l'invention est composé de plusieurs segments polymériques dits distincts. Sont distincts au sens de l'invention deux segments polymériques se différenciant par leur nature chimique et/ou leur topologie, c'est-à-dire la distribution spatiale des segments l'un par rapport à l'autre, par exemple squelette par opposition à branche latérale.

Selon une première variante privilégiée, les polymères selon l'invention sont du type copolymère-bloc irrégulier.

Au sens de l'invention, on entend désigner par copolymère-bloc, un copolymère constitué de plusieurs segments polymériques reliés entre eux de façon covalente, et appartenant à au moins deux types différents de composition chimique. Ainsi, deux segments polymériques adjacents au sein d'un copolymère-bloc linéaire sont nécessairement de nature chimique significativement différente. Le copolymère-bloc se définit par le fait que chacun des segments comporte un nombre suffisant de monomères pour présenter au sein du milieu de séparation des propriétés physicochimiques et en particulier de solvatation, comparables à celles d'un homopolymère de même composition et de même taille. Il s'oppose au copolymère statistique, dans lequel les différents types de monomères se succèdent de façon essentiellement statistique, et confèrent localement à la chaîne des propriétés globales, différentes de celles des homopolymères de chacune des espèces en question. La taille des segments homopolymères nécessaires pour obtenir ce caractère bloc peut varier en fonction des types de monomères et de l'électrolyte, mais elle est typiquement de quelques dizaines d'atomes le long du squelette dudit segment. Il est à noter qu'on peut constituer un copolymère bloc au sens de l'invention, dans lequel partie ou totalité des segments sont eux-mêmes constitués par un copolymère de type statistique, dans la mesure où on peut distinguer au sein dudit copolymère bloc des segments polymériques de taille et de différence de composition chimique suffisantes pour donner lieu d'un segment à l'autre à une variation significative des propriétés physicochimiques et en particulier de solvatation. En particulier, pour être considérée comme "segment polymérique" au sens de l'invention, une portion de polymère doit comporter le long de son squelette au moins 10 atomes.

Selon un mode privilégié de cette variante, le polymère selon l'invention est du type copolymère bloc séquencé irrégulier.

Au sens de l'invention, on entend par "copolymère bloc séquencé" un copolymère bloc composé de segments polymériques appartenant à au moins deux types chimiques distincts s'enchaînant de façon linéaire.

Selon une seconde variante privilégiée, le polymère selon l'invention est du type polymère en peigne irrégulier.

Au sens de l'invention, on entend désigner par "polymère en peigne", un polymère présentant un squelette linéaire d'une certaine nature chimique, et des segments polymériques appelés "branches latérales", d'une nature chimique identique ou différente, également linéaires mais significativement plus courts que le squelette, attachés de façon covalente audit squelette par une de leurs extrémités. Dans un polymère en peigne, les segments polymériques constituant le squelette et ceux constituant les branches latérales diffèrent par leur nature topologique. Si les segments polymériques constituant les branches latérales du polymère en peigne et ceux constituant son squelette diffèrent également par leur nature chimique, le polymère présente à la fois la caractéristique de "polymère en peigne" et celle de "copolymère-bloc". De tels polymères, qu'on appelle "copolymères en peigne", constituent un sous-ensemble des polymères en peigne et peuvent bien sûr être utilisés dans le cadre de l'invention.

On peut bien entendu envisager l'utilisation conjointe dans un milieu conforme à l'invention de copolymère(s) bloc et polymère(s) en peigne.

Le nombre de segments polymériques d'un type chimique ou topologique donné et présents dans les polymères selon l'invention s'entendent en valeur moyenne, étant entendu qu'il s'agit toujours d'une population d'un grand nombre de molécules, présentant dans lesdits nombres une certaine polydispersité.

Dans la présente description et sauf mention contraire, toutes les masses moléculaires, ainsi que toutes les moyennes sur des ensembles de chaînes ou sur des ensembles de segments polymériques, comme la masse moléculaire moyenne, ou le nombre moyen d'atomes le long du squelette, le nombre de points de jonction, ou encore le nombre moyen de greffons dans le cas d'un polymère en peigne, s'entendent comme des moyennes en masse au sens habituel de la physique des polymères.

L'ensemble des polymères considérés selon l'invention, à savoir copolymères blocs ou polymères en peigne, présentent la caractéristique avantageuse d'être de type irrégulier, c'est à dire que l'ensemble des segments d'au moins un type de nature chimique ou topologique entrant dans leur composition présentent une polymolécularité d'au moins 1,5, et de préférence supérieure à 1,8.

La polymolécularité d'un type de segments polymériques entrant dans la composition d'un polymère selon l'invention, s'entend comme la valeur moyenne de la masse moléculaire desdits segments, prise sur l'ensemble des segments de ce type entrant dans la composition dudit polymère (moyenne en masse au sens habituel de la physicochimie des polymères).

Une variante privilégiée de polymère en peigne irrégulier, consiste à présenter une polymolécularité des branches latérales d'au moins 1,5, et de préférence supérieure à 1,8.

Une autre variante privilégiée de polymère en peigne irrégulier consiste à présenter une polymolécularité des segments du squelette compris entre deux branches latérales d'au moins 1,5, et de préférence supérieure à 1,8.

Dans un autre mode de réalisation préférentiel, les segments de chacun des types de nature chimique ou topologique entrant dans la composition des polymères selon l'invention, présentent une polymolécularité d'au moins 1,5, et de préférence supérieure à 1,8.

Selon un mode de mise en oeuvre privilégié, la polymolécularité des polymères selon l'invention est supérieure à 1,5, et de préférence supérieure à 1,8.

La longueur et le nombre des segments polymériques distincts présents dans lés polymères en peigne ou les copolymères mis en oeuvre au sein des milieux selon l'invention, ainsi que leur nature chimique, peuvent varier significativement dans le cadre de l'invention, et on peut ainsi faire varier grandement les propriétés desdits milieux selon l'application désirée, comme il sera montré plus précisément à l'exposé des exemples de mise en oeuvre.

Les polymères selon l'invention ont une masse moléculaire (moyenne en masse) supérieure à 50 000, de préférence supérieure à 300 000, de préférence encore supérieure à 1 000 000, et plus encore supérieure à 3 000 000.

Selon un mode de réalisation privilégié, lesdits polymères selon l'invention manifestent au sein du milieu de séparation une affinité significative pour les parois dudit canal.

Un mode particulièrement privilégié consiste à présenter au sein du polymère selon l'invention au moins un type de segments polymériques manifestant, au sein du milieu de séparation une affinité spécifique avec la paroi, et au moins un type de segments polymériques présentant dans ledit milieu moins ou pas d'affinité avec la paroi.

La présence de ce type de segments polymériques permet au milieu selon l'invention de réduire l'adsorption des espèces aux parois du canal et/ou l'électroosmose.

En effet, un problème pour toutes les méthodes mettant en jeu des espèces au sein de canaux est l'adsorption des dites espèces aux parois des dits canaux. Ce problème est particulièrement exacerbé dans le cas de canaux de petites dimensions et de macromolécules biologiques, ces dernières étant souvent amphiphiles. Ce phénomène d'adsorption aux parois d'espèces contenues dans l'échantillon ou le fluide a pour conséquence de retarder certains analytes et de créer une dispersion supplémentaire, et donc une perte de résolution, dans le cas des méthodes analytiques. Cette adsorption peut également donner lieu à une contamination des parois du canal, susceptible d'affecter les fluides

qu'on souhaite introduire dans ce dernier par la suite.

Une autre limitation, qui concerne plus particulièrement les méthodes de séparation électrocinétiques, est l'électroosmose, un mouvement d'ensemble du milieu de séparation dû à la présence de charges sur les parois du capillaire ou du canal. Ce mouvement étant souvent variable dans le temps et non-uniforme, il nuit à la reproductibilité des mesures et à la résolution. Il est dû aux charges qui peuvent être présentes à la surface du capillaire du fait de sa structure chimique, mais peut également être créé ou augmenté par l'adsorption sur la paroi d'espèces chargées initialement contenues dans les échantillons à séparer, et en particulier de protéines.

Les polymères selon l'invention du type possédant au moins un type de segments polymériques manifestant au sein du milieu de séparation une affinité spécifique avec la paroi, possèdent de par la présence d'une pluralité de segments de ce type, et de par la masse moléculaire moyenne relativement élevée desdits segments, une grande énergie d'adsorption, et donc réduisent durablement l'électroosmose. Par ailleurs, les polymères selon l'invention comportant en outre dans leur structure des segments polymériques présentant dans ledit milieu moins ou pas d'affinité avec la paroi, évitent un caractère trop hydrophobe néfaste pour la résolution, et peuvent repousser plus efficacement les analytes des parois.

Typiquement, des types de segments polymériques ne présentant pas d'affinité avec la paroi sont constitués de polymère bien solubles dans le milieu de séparation. Toutefois, il peut exister des polymères solubles dans le dit milieu, et présentant néanmoins dans celui-ci une affinité particulière pour une paroi. Dans le cas ou le milieu de séparation est une solution aqueuse, des segments sans affinité avec la paroi sont typiquement des segments très hydrophiles. En revanche, des segments avec affinité sont peu hydrophiles voire hydrophobes. Bien entendu, d'autres types d'affinité plus spécifiques peuvent être utilisés, selon la nature de la paroi et celle du milieu de séparation.

Des copolymères optimisés pour la mise en oeuvre de l'invention sont notamment ceux dans lesquels l'ensemble des segments présentant une affinité spécifique avec la paroi représente entre 2 et 80% en masse, de préférence entre 5 et 30 % de la masse molaire totale moyenne desdits copolymères, ou entre 3 et 85 % et de préférence entre 5 et 50 % de la composition totale des copolymères en nombre de moles de monomères.

Un autre mode de mise en oeuvre privilégié, particulièrement intéressant quand les analytes sont des macromolécules biologiques, consiste à utiliser des polymères selon l'invention présentant en outre une affinité spécifique pour un ou plusieurs analytes.

Cette affinité peut être obtenue en intégrant dans la structure desdits polymères des segments polymériques aptes à présenter une affinité spécifique pour certains analytes. De tels segments polymériques peuvent être constitués par exemple et de façon non-exhaustive, par une séquence prédéterminée de monomères différents, comme un polynucléotide ou un polypeptide. Cette affinité peut également être obtenue en associant au polymère selon l'invention une protéine native ou dénaturée, une fraction de protéine ou un complexe protéique, ou encore une fonction acide ou basique, et/ou une fonction de type acide ou base au sens de Lewis.

A titre illustratif des différentes structures susceptibles d'être adoptées par le copolymère selon l'invention, on peut tout particulièrement citer celles où tout ou partie dudit copolymère se présente :

- sous la forme de copolymères blocs séquencés irréguliers. Dans ce cas, une variante privilégiée consiste à alterner le long du polymère des segments présentant une affinité spécifique avec la paroi, et des segments présentant une affinité moindre ou nulle pour la paroi. On peut également envisager d'alterner le long du polymère des segments présentant une affinité spécifique avec certains analytes, et des segments présentant une affinité moindre ou nulle avec lesdits analytes ;
- sous la forme de copolymères en peigne irréguliers. Dans ce cas, une variante privilégiée est caractérisée en ce que les dits polymères se présentent sous la forme de polymères en peigne dont le squelette est constitué par plusieurs segments polymériques présentant une affinité spécifique avec la paroi, et dont les branches latérales sont constituées de segments polymériques présentant une affinité moindre ou nulle pour la paroi, ou de polymères en peigne dont les branches latérales sont constituées par des segments polymériques présentant une affinité spécifique pour la paroi, et dont le squelette est constitué par des segments polymériques présentant une affinité moindre ou nulle pour la paroi. Ces polymères peuvent également se présenter sous la forme de polymères en peigne dont certaines branches latérales sont constituées par des segments polymériques présentant une affinité spécifique pour certains analytes, et dont le squelette est constitué par des segments polymériques présentant une affinité moindre ou nulle pour ces analytes.

Bien entendu, entrent également dans le cadre de l'invention, des systèmes dans lesquels on combine entre eux plusieurs types de variantes privilégiées ci-dessus, soit par association de segments polymériques de plus de deux types différents, soit sous forme d'un mélange de copolymères différents. On peut ainsi, à titre d'exemple, combiner au sein d'un copolymère selon l'invention, des segments polymériques présentant une affinité avec la paroi, des segments polymériques ou des groupements présentant une affinité spécifique pour certains analytes, et des segments polymériques ne présentant d'affinité spécifique ni avec les parois ni avec les analytes. On peut également, toujours à titre

d'exemple, combiner dans un milieu selon l'invention des copolymères blocs comportant des segments polymériques présentant une affinité avec la paroi et des segments polymériques ne présentant d'affinité spécifique ni avec les parois ni avec les analytes, et des polymères comprtant des segments polymériques ou des groupements présentant une affinité spécifique pour certains analytes, et des segments polymériques ne présentant d'affinité spécifique ni avec les parois ni avec les analytes.

Selon un mode préféré de l'invention, l'ensemble des segments polymériques d'un type donné de nature chimique ou topologique possèdent en moyenne le long de leur squelette, un nombre d'atomes supérieur à 75, et de préférence encore supérieur à 210, ou présentent une masse moléculaire supérieure à 1500, et de préférence supérieure à 4500.

Selon un mode encore plus privilégié, les différents types de segments présentent le long de leur squelette, un nombre moyen d'atomes supérieur à 75, et de préférence encore supérieur à 210, ou présentent une masse moléculaire supérieure à 1500, et de préférence supérieure à 4500.

Selon un mode de mise en oeuvre privilégié, le milieu de séparation est constitué d'un liquide dans lequel au moins un polymère conforme à l'invention est dissous à raison de 0,1 à 20% et de préférence de 1 à 6% en poids.

Il est particulièrement intéressant pour la mise en oeuvre de l'invention d'utiliser des copolymères blocs ou des homopolymères en peigne dont au moins un des types de segments est constitué d'un polymère choisi parmi les polyéthers, polyesters comme l'acide polyglycolique, les homopolymères et copolymères statistiques solubles du type polyoxyalkylène comme le polyoxypropylène, polyoxybutylène, polyoxyéthylène, les polysaccharides, l'alcool polyvinylique, la polyvinylpirrolidone, les polyuréthanes, les polyamides, les polysulfonamides, les polysulfoxydes, la polyoxazoline, le polystyrènesulfonate, les polymères et copolymères d'acrylamides, de méthacrylamides et d'allyles, substitués ou non.

A titre représentatif des types de segments polymériques présentant dans un milieu de séparation aqueux peu ou pas d'affinité avec les parois, on peut tout particulièrement citer le polyacrylamide et l'acide polyacrylique, le polyacryloylaminopropanol, les polymères et copolymères acryliques et allyliques hydrosolubles, le dextrane, le polyethylène glycol, les polysaccharides et divers dérivés de la cellulose tels que l'hydroxyethyl cellulose, la methylcellulose, l'hydroxypropylcellulose, l'hydroxypropylmethylcellulose, ou encore la méthylcellulose, l'alcool polyvinylique, les polyuréthanes, les polyamides, les polysulfonamides, les polysulfoxydes, la polyoxazoline, le polystyrènesulfonate, ainsi que les polymères porteurs de groupements hydroxyles, et tous les copolymères statistiques des dérivés mentionnés ci-dessus.

Bien entendu, d'autres segments polymériques solubles dans le milieu de séparation peuvent être utilisés selon l'invention, en fonction de la nature dudit fluide et de celle des parois du canal, de l'application particulière et de la facilité à les introduire au sein d'un polymère bloc de structure souhaitée.

A titre représentatif des types de segments polymériques, solubles ou non en solvants aqueux, et pouvant présentant dans ceux-ci une affinité particulière avec les parois, on peut citer le diméthylacrylamide, les acrylamides N-substitués par des fonctions alkyles, les acrylamides N,N disubstitués par des fonctions alkyles, l'allylglycidylether, les copolymères des dérivés acryliques ci-dessus entre eux ou avec d'autres dérivés acryliques, les alcanes, les dérivés fluorés, les silanes, les fluorosilanes, l'alcool polyvinylique, les polymères et copolymères impliquant des dérivés de l'oxazoline, ainsi que les d'une manière générale les polymères présentant une combinaison de liaisons Carbone-Carbone, de fonctions ether-oxyde et de fonctions époxyde, ainsi que tous les copolymères statistiques de ces composés.

De nombreux types de segments polymériques peuvent être choisis pour constituer les segments polymériques constituant un polymère selon l'invention, en fonction de l'électrolyte envisagé, parmi les types de polymères connus de l'homme de l'art, en particulier parmi ceux solubles en milieu aqueux. Il est ainsi possible de se reporter à l'ouvrage " Polymer Handbook " Brandrupt & Immergut, John Wiley, New York.

Les polymères selon l'invention peuvent être naturels ou synthétiques. Selon une variante préférée pour la variété et le contrôle qu'elle permet au niveau de la microstructure, les polymères selon l'invention sont des polymères synthétiques.

Conviennent tout particulièrement à l'invention :

- les copolymères du type copolymère en peigne dont le squelette est de type dextrane, acrylamide, acide acrylique, acryloylaminoéthanol ou (N,N)-diméthylacrylamide et au niveau duquel sont greffés des segments latéraux de type acrylamide, acrylamide substitué, (N,N)-dimethylacrylamide (DMA), ou du type copolymère de DMA et d'allylglycidylether (AGE), ou encore d'homopolymère ou de copolymère d'oxazoline ou de dérivés de l'oxazoline ;
- Les copolymères non-thermosensibles du type copolymère bloc séquencé irrégulier et présentant le long de leur squelette une alternance de segments de type polyoxyéthylène et de segments de type polyoxypropylène,

ou une alternance de segments de type polyoxyéthylène et de segments de type polyoxybutylène ou plus généralement une alternance de segments de polyéthylène et de segments de type polyéther notablement plus hydrophobes que le polyoxyéthylène ;

- les copolymères du type copolymère bloc séquencé irrégulier et présentant le long de leur squelette une alternance de segments de type acrylamide, acide acrylique, acryloylaminoéthanol ou diméthylacrylamide d'une part, et de segments de type (N,N)-dimethylacrylamide (DMA), ou du type copolymère de DMA et d'allylglycidylether (AGE), ou encore d'homopolymère

ou de copolymère d'oxazoline ou de dérivés de l'oxazoline ;

- les polymères du type polymère en peigne irrégulier dont le squelette est de type polymère d'agarose, d'acrylamide, d'acrylamide substitué, d'acide acrylique, d'acryloylaminoéthanol, de diméthylacrylamide (DMA), d'allylglycidylether (AGE), de copolymère statistique de DMA et d'AGE, d'oxazoline de dérivés de l'oxazoline, de dextrane, de méthylcellulose, d'hydroyéthylcellulose, de celluloses modifiées, de polysaccharides, d'étheroxydes, et au niveau duquel sont greffés des segments latéraux de type polymère d'agarose, d'acrylamide, d'acrylamide substitué, d'acide acrylique, d'acryloylaminoéthanol, de diméthylacrylamide (DMA), d'allylglycidylether (AGE), de copolymère statistique de DMA et d'AGE, d'oxazoline de dérivés de l'oxazoline, de dextrane, de méthylcellulose, d'hydroyéthylcellulose, de celluloses modifiées, de polysaccharides, d'éther-oxydes ;
- les copolymères du type copolymère en peigne irrégulier dont le squelette est de type polymère d'acrylamide, d'acrylamide substitué, d'acide acrylique, d'acryloylaminoéthanol, de diméthylacrylamide (DMA), d'allylglycidylether (AGE), de copolymère statistique de DMA et d'AGE, d'oxazoline, de dérivés de l'oxazoline, de dextrane, d'agarose, de méthylcellulose, d'hydroyéthylcellulose, de celluloses modifiées, de polysaccharides, d'éther-oxydes, et est porteur de segments latéraux hydrophobes à courtes chaînes tels que des chaînes alkyles, des dérivés aromatiques, des fluoroalkyles, des silanes ou des fluorosilanes.

Il est également à noter que dans la majorité des applications, il est préférable d'utiliser un polymère selon l'invention essentiellement neutre. Il peut cependant être utile pour certaines applications, et en particulier pour éviter l'adsorption d'espèces présentant à la fois des charges et des parties hydrophobes, de choisir un polymère selon l'invention délibérément chargé, de préférence d'une charge opposée à celle desdites espèces.

En ce qui concerne la préparation des copolymères mis en oeuvre selon l'invention, elle peut être effectuée par toute technique conventionnelle de polymérisation ou polycondensation. Le choix de la méthode de préparation est généralement effectué en prenant en compte la structure désirée pour le copolymère à savoir peigne ou linéaire et la nature chimique des différents blocs le constituant.

A titre représentatif de ces variantes de préparation, on peut tout particulièrement citer les procédés selon lesquels lesdits copolymères sont obtenus par :

- polycondensation, polymérisation ou copolymérisation, ionique

ou radicalaire, de monomères identiques ou différents, de macromonomères identiques ou différents, ou d'un mélange de monomères et de macromonomères identiques ou différents ou

- par greffage de plusieurs segments polymériques sur un squelette polymérique linéaire ou ramifié de nature chimique identique ou différente.

De manière préférée, tout ou partie des copolymères mis en oeuvre selon l'invention sont obtenus par

- a: copolymérisation de monomères et de macromonomères comportant à l'une au moins de leurs extrémités une fonction réactive, ou
- b: copolymérisation de macromonomères comportant au sein de leur structure au moins une fonction réactive.

Au sens de l'invention, on entend par fonction réactive un groupement permettant à la molécule porteuse de ce groupement d'être intégrée dans la macromolécule au cours de la réaction de copolymérisation sans interrompre la dite copolymérisation.

A l'aide des règles et modes privilégiés énoncés ci-dessus, l'homme de l'art est capable de préparer des copolymères conformes à l'invention, en adaptant la structure, la nature et le mode de préparation desdits polymères en fonction des propriétés de séparation recherchées pour une application ou une autre.

La présente invention a également pour objet un procédé pour la séparation, l'analyse et/ou l'identification d'espèces contenues dans un échantillon, caractérisé par la mise en oeuvre des étapes suivantes:

a/ remplissage du canal d'un appareil de séparation avec un milieu de séparation selon l'invention,
b/ introduction à une extrémité dudit canal dudit échantillon contenant lesdites espèces,

c/ application d'un champ externe destiné à mouvoir certaines espèces contenues dans l'échantillon, notamment un champ électrique, et

d/ récupération ou détection du passage desdites espèces à un endroit le long du canal, distinct du point d'introduction de l'échantillon.

Dans une variante privilégiée, il n'est pas nécessaire de procéder à un changement de température entre la phase de remplissage du capillaire et celle de l'analyse.

En fonction des applications particulières, le milieu de séparation peut contenir, outre les polymères selon l'invention, d'autres éléments, et en particulier des composants interagissant avec les espèces ou les parois. De nombreux éléments de ce type sont connus de l'homme de l'art.

En l'occurrence, il est possible de combiner au sein du milieu de séparation, des polymères du type copolymère bloc irrégulier, et d'autres polymères capables d'interagir avec les analytes soit par interaction stérique, soit par affinité, afin d'améliorer les performances par rapport à celles obtenues avec le polymère selon l'invention utilisé seul. Dans ce cas, sont plus particulièrement préférés des polymères selon l'invention présentant une fraction en masse de segments polymériques présentant une affinité spécifique pour la paroi plus importante que lorsque ces polymères sont utilisés seuls. Cette fraction peut être comprise entre 20% et 80%.

La présente invention a également pour objet l'utilisation d'un milieu de séparation selon l'invention pour la séparation, la purification, la filtration ou l'analyse d'espèces choisies parmi des espèces moléculaires ou macromoléculaires, et en particulier des macromolécules biologiques comme les acides nucléiques (ADN, ARN, oligonucléotides), les analogues d'acides nucléiques obtenus par synthèse ou modification chimique, les protéines, les polypeptides, les glycopeptides et les polysaccharides, des molécules organiques, des macromolécules synthétiques ou des particules telles que des particules minérales, de latex, des cellules ou des organelles.

Dans le cas des méthodes d'analyse par électrophorèse, l'invention est particulièrement utile pour le séquençage de l'ADN, pour lequel elle permet d'obtenir des largeurs de bandes minimales. Elle est également particulièrement favorable pour la séparation de protéines, de protéoglycanes,
ou de cellules, pour lesquelles les problèmes d'adsorption sur la paroi sont particulièrement gênants et particulièrement difficiles à résoudre.

Avantageusement, le milieu revendiqué peut être mis en oeuvre dans un canal dont une dimension au moins est de dimension submillimétrique.

En ce qui concerne les appareils, le milieu revendiqué est particulièrement avantageux pour les systèmes microfluidiques, car il permet à travers le choix optimal des différents types de blocs au sein des polymères, de combiner des blocs présentant une bonne affinité pour la surface du canal pour l'obtention d'un traitement durable, et des blocs présentant une bonne répulsion pour les espèces à séparer, et ce quelles que soient lesdites espèces et la nature chimique dudit canal.

Les milieux selon l'invention et les méthodes de séparation mettant en jeu ces milieux sont particulièrement avantageux pour la séparation électrophorétique et les applications de diagnostic, de génotypage, et de criblage à haut débit, de contrôle de qualité, ou pour la détection de présence d'organismes génétiquement modifiés dans un produit.

En fait, les polymères composant le milieu de séparation considéré dans le cadre de la présente invention s'avèrent avantageux à plusieurs titres.

D'une part, leur capacité à présenter un caractère de "polymère-bloc" leur permet de combiner des propriétés appartenant à des polymères de nature chimique différente, et qu'on ne peut pas toujours réunir dans un homopolymère ou un copolymère statistique. Ils permettent ainsi d'adapter plus souplement la nature chimique du milieu de séparation, en fonction d'une part des espèces à séparer, et d'autre part de la nature chimique des canaux dans laquelle la séparation s'effectue. Ils sont ainsi particulièrement avantageux aussi bien dans les applications utilisant des canaux constitués de polymères ou d'élastomères tels que le PDMS (polydimethylsiloxane), le PMMA (polymethylmethacrylate), le polycarbonate, le polyéthylène, le polypropylène, le polyethylène terephtalate, le polyimide, ou de matériaux inorganiques tels que le verre, les céramiques, le silicium, l'acier inoxydable, le titane, que dans des applications plus traditionnelles utilisant des canaux dont les parois sont constituées de silice fondue.

Par rapport aux copolymères-blocs de l'art antérieur, les polymères selon l'invention présentent également des performances supérieures en terme de résolution, vraisemblablement liées à leur caractère irrégulier, c'est-à-dire à la polymolécularité des segments polymériques entrant dans les polymères selon l'invention. Cette caractéristique est particulièrement surprenante, dans la mesure où l'ensemble des copolymères-blocs utilisés dans l'art antérieur met délibérément en jeu des copolymères présentant des segments régulièrement espacés et/ou d'une longueur sélectionnée et essentiellement uniforme (c'est à dire une polymolécularité faible). Cette polymolécularité des segments, dans les polymères selon l'invention présente également des avantages en termes de coût et de flexibilité dans la formulation, puisque des polymères comportant de tels segments polymoléculaires sont non seulement plus performants, mais aussi plus faciles à préparer. En particulier, ils peuvent être préparés à de fortes masses moléculaires.

Dans les applications pour lesquelles une réduction de l'électroosmose ou de l'interaction d'espèces avec la

paroi est souhaitée, les polymères selon l'invention, de par la présence dans leur structure d'un nombre important de segments polymériques présentant une affinité significative avec la paroi, possèdent une grande énergie d'adsorption et peuvent donc réduire durablement l'électroosmose et l'adsorption d'espèces.

Enfin, il est en outre vraisemblable que la combinaison d'un squelette linéaire et d'une multiplicité des points de jonction confère aux milieux de séparation selon l'invention certaines des propriétés des gels à l'échelle locale, ce qui est bénéfique en termes de performances de séparation, tout en leur conservant à grande échelle, et en particulier en ce qui concerne les propriétés d'écoulement, des propriétés comparables à celles de polymères linéaires.

Les figures et exemples donnés ci-après sont présentés à titre illustratif et non limitatif de la présente invention.

FIGURES :

Figures 1 : Exemple de configuration schématique 1a: d'un copolymère-bloc séquencé irrégulier; 1b: d'un polymère en peigne irrégulier; 1c: d'un copolymère en peigne irrégulier. Les traits gras correspondent à un type de nature chimique, et les traits fins à un autre type de nature chimique.

Figure 2 : Electrophorégramme témoin représentant la séparation du sizer 50-500 bp, Pharmacia biotech, obtenus à 50°C dans un appareil ABI 310 (Perkin-Elmer), utilisant un capillaire non traité et comme milieu de séparation un tampon 100 mM Na TAPS, 2 mM EDTA, 7 M Urée, dans lequel est dissous 5% d'un homopolymère commercial du type polyacrylamide (Masse moléculaire 700 000-1000000); Les tailles d'ADN correspondant aux différents pics sont indiquées sur le diagramme, en nombre de bases.

Figure 3 : Electrophorégramme témoin représentant une séparation dans des conditions identiques à la figure 2, avec un milieu de séparation commercial "POP6" PE biosystems, Les tailles d'ADN correspondant aux différents pics sont indiquées sur le diagramme, en nombre de bases.

Figure 4 : Electrophorégramme représentant une séparation dans des conditions identiques à la figure 2, avec un milieu de séparation 100 mM Na TAPS, 2 mM EDTA, 7 M Urée, dans lequel est dissous 5% de copolymère en peigne P(AM-PDMA)-2 décrit dans l'exemple 2. Les tailles d'ADN correspondant aux différents pics sont indiquées sur le diagramme, en nombre de bases.

Figure 5: Comparaison de la résolution calculée entre pics différant d'une base à 500 bases, obtenus à 50°C dans un appareil ABI 310 (Perkin-Elmer), utilisant comme milieu de séparation

a: un milieu de séparation commercial "Pop6" PE Biosystems.
b; un tampon 50 mM Na TAPS, 2 mM EDTA, 7 M Urée, dans lequel est dissous 5% d'acrylamide linéaire (Masse moléculaire 700 000 - 1 000 000),
c; le même tampon, dans lequel est dissous 5% de copolymère-bloc irrégulier selon l'invention P(AM-PDMA)-2 décrit dans l'exemple 2.

Figure 6 : viscosité de solutions à 3%, d'acrylamide linéaire (LPA) et de copolymères selon l'invention poly (AM-PDMA)-1, préparé selon l'exemple 2, poly (AM-PDMA)-2, préparé selon l'exemple 4, et poly(AM-PDMA)-3, préparé selon l'exemple 5.

Figure 7 : Résolutions obtenues lors de la séparation électrophorétique d'ADN, dans des solutions, d'acrylamide linéaire (LPA), de polymère commercial « POP5), et de copolymères selon l'invention poly (AM-PDMA)-1, préparé selon l'exemple 2, poly (AM-PDMA)-2, préparé selon l'exemple 4, et poly(AM-PDMA)-3, préparé selon l'exemple 5, à 3 et 5 %.

EXEMPLE 1: Préparation d'un macromonomère de PDMA fonctionnalisé de masse moléculaire voisine de 10 000 en vue de la préparation de copolymère conformes à l'invention.

1) Polymérisation du PDMA

La polymérisation radicalaire du N,N Dimethylacrylamide (DMA) est réalisée dans l'eau pure. L'amorceur est un couple redox dont l'oxydant est le persulfate de potassium, $K_2S_2O_8$ (KPS) et le réducteur est l'aminoéthanethiol AET, HCl. La réaction d'amorçage est :

$$K_2S_2O_8 + 2Cl^-, NH_3^+\text{-}CH_2CH_2\text{-}SH \rightarrow 2KHSO_4 + 2Cl^-, HN_3^+\text{-}CH_2\text{-}CH_2\text{-}S^\bullet$$

L'AET,HCl joue également le rôle d'agent de transfert, ce qui permet de contrôler la longueur des chaînes.

Mode opératoire

Dans un tricol de 500 ml surmonté d'un réfrigérant et équipé d'un dispositif d'arrivée d'azote, on introduit 0,18 Mole de DMA et 200 ml d'eau. le mélange est alors agité et chauffé à 29° C par un bain d'eau. On démarre le barbotage d'azote. Au bout de 45 minutes, on ajoute 0,61 g d'AET,HCl (0,0054 mole) préalablement dissous dans 20 ml d'eau, puis 0,0018 moles de persulfate de potassium (KPS) dissous dans une quantité minimale d'eau. Le mélange est maintenu sous agitation durant 3 heures. La solution est ensuite concentrée puis lyophilisée.

Pour isoler le polymère on réalise une précipitation selon la procédure suivante :

Le solide obtenu est redissout dans 100 ml de méthanol. Le chlorhydrate présent est neutralisé par addition de 0,0054 mole de KOH (soit 0,30 g dissous dans environ 25 ml de méthanol) incorporée goutte à goutte dans la solution. Le sel formé, KCl, précipite et est extrait par filtration. Le filtrat ainsi récupéré est concentré puis versé goutte à goutte dans 4 litres d'éther. Le polymère précipite et est récupéré par filtration sur fritté n° 4. Le solide est ensuite séché sous vide de pompe à palettes. Le rendement massique est de l'ordre de 50 %.

Le protocole ci-dessus conduit à un polymère aminé dénommé "PDMA", et correspond à des rapports amorceur-monomère Ro=0,03 et Ao=0,01, où:

$$Ro = [R\text{-}SH] / [NIPAM] \text{ et } Ao = [KPS] / [NIPAM].$$

2) Modification du PDMA aminé.

Les macromolécules de PNIPAM synthétisées présentent des fonctions amines en bout de chaînes, celles-ci provenant de l'amorceur aminoéthanethiol AET, HCl.

Par réaction de la fonction amine sur l'acide acrylique, on fixe une double liaison vinylique à l'extrémité de la chaîne selon le schéma réactionnel suivant :

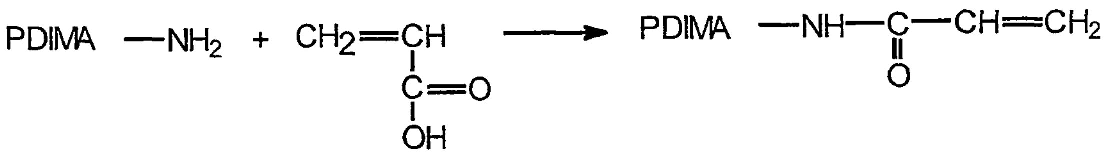

Mode opératoire :

Dans un bécher de 100 ml, on introduit 50 ml de chlorure de méthylène, 1,5 g d'acide acrylique (0,021 mole), 9 g de PDMA et 4,3 g de dicyclohexylcarbodiimide (DCCI) (0,021 mole).

Le milieu réactionnel est agité pendant une heure. L'acide acrylique étant en fort excès par rapport au PDMA (la quantité d'acide acrylique est environ vingt fois celle du PDMA), l'ensemble des fonctions aminées a été modifié. Le mélange est ensuite filtré sur fritté n° 4 pour éliminer le précipité dicyclohexylurée, sous-produit résultant de la transformation du DCCI. La purification est effectuée par précipitation dans l'éther.

On obtient ainsi un macromonomère PDMA-1 porteur d'une fonction allyle en bout de chaîne, avec un rendement massique de l'ordre de 70%.

La masse molaire moyenne et la polydispersité des macromonomères ainsi préparés, mesurées par SEC (chromatographie d'exclusion stérique), sont respectivement de l'ordre de 15 000 et 2.

<u>EXEMPLE 2 :</u>

Préparation d'un copolymère P(AM-PDMA)-1 à squelette acrylamide et greffons PDMA, de masse moléculaire 1500 kDalton.

La copolymérisation du PDMA aminé (0.4 g) et de l'acrylamide (2;8g) est réalisée pendant 4h dans 50 ml d'eau à température ambiante, avec un dégazage énergique à l'argon. L'amorceur utilisé est le couple redox persulfate d'ammonium ($(NH_4)_2S_2O_8$) [0,075% en mole de la quantité de monomères] - métabisulfite de sodium ($Na_2S_2O_5$) (0,0225% en mole de la quantité de monomères). Le copolymère résultant est purifié par précipitation dans l'acétone et séchage

sous vide. Sa masse moléculaire est de 1500 KDalton, et sa polymolécularité Mw/Mn de l'ordre de 2. Le taux d'incorporation de macromonomère, mesuré par RMN du proton est de l'ordre de 6%, ce qui correspond à un nombre moyen de branches latérales sur le squelette de l'ordre de 6.

En raison du mode de polymérisation radicalaire utilisé, les macromonomères constituant les chaînes latérales sont intégrés dans la chaîne polymérique à des positions aléatoires déterminées par le hasard des collisions entre molécules (distribution statistique). Ce mode de polymérisation conduit à une distribution des masses moléculaires des segments polymériques du squelette compris entre deux branches latérales de forme approximativement exponentielle, et donc à des polymolécularités desdits segments polymériques du squelette largement supérieures à 1,8.

EXEMPLE 3

Propriétés de séparation obtenues pour l'ADN simple-brin (sizer 50-500 bp, Pharmacia biotech), à 50°C dans un appareil ABI 310 (Perkin-Elmer), dans un tampon 100 mM Na TAPS, 2 mM EDTA, 7 M Urée, dans différents milieux de séparation. On constate visuellement (Fig. 4), et plus quantitativement à travers les mesures de résolution (Fig. 5), que le milieu de séparation selon l'invention P(AM-PDMA)-2 améliore la résolution par rapport au même squelette polymérique non porteur de branches latérales (PAM, fig. 2 et 5), mais également par rapport à un produit commercial à base de PDMA linéaire (POP6 Fig. 3 et 5). Le temps de séparation est également réduit, ce qui est un avantage supplémentaire des milieux selon l'invention. Il apparaît donc que, de façon surprenante mais bénéfique, ce polymère selon l'invention qui comporte une fraction importante d'acrylamide, et une fraction plus faible de PDMA, présente de par la disposition particulière des dites fractions et de la présence de points de jonction qui caractérisent l'invention, des propriétés supérieures à celles de chacun desdits composants sous forme d'homopolymère.

EXEMPLE 4 : Préparation d'un copolymère P(AM-PDMA)-2 à squelette acrylamide et greffons PDMA, de masse moléculaire environs 3000 kDalton.

La préparation est identique à celle décrite dans l'exemple 2, à l'exception de la concentration en $((NH_4)_2S_2O_8)$ [0.1 % au lieu de 0,075%, en mole de la quantité de monomères] et en $(Na_2S_2O_5)$ (0,015% au lieu de 0,0225%, en mole de la quantité de monomères). La viscosité, présentée dans la figure 6, permet d'évaluer la masse moléculaire, de l'ordre de 3000 kDalton, à partir de celle du p(AM-PDMA)-1, en utilisant la dépendance cubique de la viscosité en fonction de la masse moléculaire pour des polymères enchevêtrés.

EXEMPLE 5 : Préparation d'un copolymère P(AM-PDMA)-3 porteur de greffons PDMA de masse moléculaire environs 30 000.

Dans un premier temps, le macromonomère de masse moléculaire 30 000 est préparé comme décrit dans l'exemple 1, à l'exception du rapport Ro, fixé à 0,015 au lieu de 0,03. Ce macromonomère est ensuite polymérisé avec de l'acrylamide, selon le protocole décrit dans l'exemple 4.

EXEMPLE 6 : Mesure de la viscosité de solutions à 3% obtenues avec les polymères décrits dans les exemples 2, 4, et 5, ainsi qu'avec un homo polymère linéaire d'acrylamide. Dans cet exemple, chacun des polymères a été introduit à raison de 3g/100ml dans l'eau purifiée (MilliQ). La viscosité de chacune des solutions correspondantes a été mesurée sur un rhéomètre cone-plan Brookfield DV3 piloté par le logiciel Rheocalc (Sodexim, Muizon, F). Le taux de cisaillement retenu est de 10 (1/s) pour un gradient de température de 1°C par minute. On constate figure 6 que les copolymères selon l'invention ne présentent pas de caractère thermosensible (leur viscosité décroît de façon faible et régulière avec la température), et une viscosité modérée. On constate également qu'on peut faire varier la structure et les propriétés des copolymères en contrôlant les conditions de polymérisation.

EXEMPLE 7: Séparations électrophorétiques de fragments d'ADN simple-brin, dans des milieux de séparation selon l'invention constitués à base de copolymères décrits dans les exemples 2, 4 et 5, et à titre de comparaison, dans le polyacrylamide linéaire (LPA) et le milieu de séparation commercial « POP5 » (Applied Biosystems). Les conditions de séparation sont identiques à celles de l'exemple 4, à l'exception de l'échantillon, un « sizer » de 100 à 1500 bases (BioVentures, USA). On constate figure 7 que dans la gamme la plus intéressante pour le séquençage, (taille des fragments 600 à 1000), les milieux à base de copolymères selon l'invention, en particulier ceux correspondant à une concentration en masse dans de milieu de séparation de 3%, conduisent à une résolution nettement supérieure à celle obtenue avec les polymères de l'art antérieur. Considérant qu'une résolution de l'ordre de 0,3 à 0,5 est suffisante pour séquencer l'ADN à la base près, les milieux selon l'invention doivent permettre des longueurs de lecture supérieures à 800 bases.

## Revendications

1. Milieu liquide pour l'analyse, la purification ou la séparation d'espèces au sein d'un canal et comprenant au moins un polymère composé de plusieurs segments polymériques, ce milieu étant non thermosensible, et ledit polymère étant du type copolymère-bloc irrégulier ou polymère en peigne irrégulier, possédant en moyenne au moins trois points de jonction établis entre des segments polymériques de nature chimique ou topologique différente, possédant une masse moléculaire moyenne supérieure à 50 000, et **caractérisé en ce que** l'ensemble des segments d'au moins un type de nature chimique ou topologique entrant dans sa composition présente une polymolécularité d'au moins 1,5.

2. Milieu selon la revendication 1, **caractérisé en ce que** les segments de chacun des types de nature chimique ou topologique entrant dans la composition du polymère, présentent une polymolécularité d'au moins 1,5.

3. Milieu selon la revendication 1 ou 2, **caractérisé en ce que** ladite polymolécularité est supérieure à 1,8.

4. Milieu selon l'une quelconque des revendications précédentes, **caractérisé en ce que** ledit polymère a une masse moléculaire moyenne supérieure à 300 000.

5. Milieu selon l'une quelconque des revendications 1 à 4, **caractérisé en ce que** ledit polymère manifeste une affinité spécifique pour les parois dudit canal.

6. Milieu selon la revendication 5, **caractérisé en ce que** ledit polymère possède au moins un type de segments polymériques manifestant au sein du milieu de séparation une affinité spécifique avec la paroi et au moins un type de segments polymériques présentant dans ledit milieu moins ou pas d'affinité avec la paroi.

7. Milieu selon la revendication 5 ou 6, **caractérisé en ce que** l'ensemble des segments présentant une affinité spécifique avec la paroi représente entre 2 et 80 % en masse de la masse molaire totale moyenne dudit polymère.

8. Milieu selon l'une des revendications précédentes, **caractérisé en ce** +que le polymère présente une affinité spécifique pour un ou plusieurs analytes.

9. Milieu selon la revendication 8, **caractérisé en ce que** le polymère est porteur de nucléotides ou de polypeptides de séquence déterminée.

10. Milieu selon la revendication 8, **caractérisé en ce que** le polymère est associé à une protéine, une fraction de protéine, un complexe protéique, et/ou une fonction acide ou basique.

11. Milieu selon l'une des revendications précédentes, **caractérisé en ce que** l'ensemble des segments polymériques d'au moins un type de nature chimique ou topologique possèdent en moyenne un nombre d'atomes supérieur à 75, et de préférence supérieur à 210, ou présentent une masse moléculaire supérieure à 1 500 et de préférence supérieure à 4 500.

12. Milieu selon l'une quelconque des revendications précédentes, **caractérisé en ce que** les différents types de segments polymériques composant le dit polymère possèdent en moyenne un nombre moyen d'atomes supérieur à 75, et de préférence supérieur à 210, ou présentent une masse moléculaire supérieure à 1 500, et de préférence supérieure à 4 500.

13. Milieu selon l'une quelconque des revendications précédentes, **caractérisé en ce que** le polymère possède en moyenne un nombre de points de jonction compris entre 4 et 100.

14. Milieu selon l'une quelconque des revendications précédentes, **caractérisé en ce que** le polymère est un copolymère bloc présentant en moyenne au moins quatre segments polymériques.

15. Milieu selon l'une quelconque des revendications précédentes, **caractérisé en ce que** le polymère est un polymère en peigne présentant en moyenne au moins deux chaînes latérales.

16. Milieu selon l'une quelconque des revendications précédentes, **caractérisé en ce que** le polymère comprend au moins un type de segment choisi parmi les polyéthers, polyesters comme l'acide polyglycolique, les homopolymères

et copolymères statistiques solubles du type polyoxyalkylène comme le polyoxypropylène, polyoxybutylène, polyoxyéthylène, les polysaccharides, l'alcool polyvinylique, la polyvinylpirrolidone, les polyuréthanes, les polyamides, les polysulfonamides, les polysulfoxydes, la polyoxazoline, le polystyrènesulfonate, les polymères et copolymères d'acrylamides, de méthacrylamides et d'allyles, substitués ou non.

**17.** Milieu selon l'une quelconque des revendications précédentes, **caractérisé en ce que** ledit polymère comprend au moins un polymère choisi parmi :

- les copolymères du type copolymère en peigne dont le squelette est de type dextrane, acrylamide, acide acrylique, acryloylaminoéthanol ou (N, N)-diméthylacrylamide et au niveau duquel sont greffés des segments latéraux de type acrylamide, acrylamide substitué, (N,N)-diméthylacrylamide (DMA), ou du type copolymère de DMA et d'aliyiglycidylether (AGE), ou d'homopolymère ou de copolymère d'oxazoline ou de dérivés de l'oxazoline,
- les copolymères non-thermosensibles du type copolymère séquencé irrégulier et présentant le long de leur squelette une alternance de segments de type polyoxyéthylène et de segments de type polyoxypropylène, ou une alternance de segments de type polyoxyéthylène et de segments de type polyoxybutylène ou une alternance de segments de polyéthylène et de segments de type polyéther plus hydrophobes que le polyoxyéthylène,
- les copolymères du type copolymère bloc séquencé irrégulier et présentant le long de leur squelette une alternance de segments de type acrylamide, acide acrylique, acryloylaminoéthanol ou diméthylacrylamide d'une part, et de segments de type (N,N)-diméthylacrylamide (DMA), ou du type copolymère de DMA et d'allyllglycidylether (AGE), ou d'homopolymère ou de copolymère d'oxazoline ou de dérivés de l'oxazoline,
- les polymères du type polymère en peigne irrégulier dont le squelette est de type polymère d'agarose, d'acrylamide, d'acrylamide substitué, d'acide acrylique, d'acryloylaminoéthanol, de diméthylacrylamide (DMA), d'allylglycidylether (AGE), de copolymère statistique de DMA et d'AGE, d'oxazoline de dérivés de l'oxazoline, de dextrane, de méthylcellulose, d'hydroyéthylcellulose, de celluloses modifiées, de polysaccharides, d'étheroxydes, et au niveau duquel sont greffés des segments latéraux de type polymère d'agarose, d'acrylamide, d'acrylamide substitué, d'acide acrylique, d'acryloylaminoéthanol, de diméthylacrylamide (DMA), d'allylglycidylether (AGE), de copolymère statistique de DMA et d'AGE, d'oxazoline de dérivés de l'oxazoline, de dextrane, de méthylcellulose, d'hydroyéthylcellulose, de celluloses modifiées, de polysaccharides, d'éther-oxydes,
- les copolymères du type copolymère en peigne irrégulier dont le squelette est de type polymère d'acrylamide, d'acrylamide substitué, d'acide acrylique, d'acryloylaminoéthanol, de diméthylacrylamide (DMA), d'allylglycidylether (AGE), de copolymère statistique de DMA et d'AGE, d'oxazoline, de dérivés de l'oxazoline, de dextrane, d'agarose, de méthylcellulose, d'hydroyéthylcellulose, de celluloses modifiées, de polysaccharides, d'éther-oxydes, et est porteur de segments latéraux hydrophobes à courtes chaînes tels que des chaînes alkyles, des dérivés aromatiques, des fluoroalkyles, des silanes, des fluorosilanes.

**18.** Utilisation d'un milieu selon l'une des revendications 1 à 17, pour la séparation, la purification, la filtration ou l'analyse d'espèces choisies parmi des espèces moléculaires ou macromoléculaires, des macromolécules biologiques de type acides nucléiques, leurs analogues de synthèse, les protéines, les polypeptides, les glycopeptides et les polysaccharides, des molécules organiques, des macromolécules synthétiques ou des particules telles que des particules minérales, de latex, des cellules ou des organelles.

**19.** Utilisation selon la revendication 18 ou utilisation d'un milieu selon l'une des revendications 1 à 17 dans un canal dont une dimension au moins est de dimension est de dimension submillimétrique.

**20.** Utilisation selon la revendication 18 ou 19 ou utilisation d'un milieu selon l'une des revendications 1 à 17 pour les séparations électrocinétiques.

**21.** Utilisation selon l'une des revendications 18 à 20, ou utilisation d'un milieu selon l'une des revendications 1 à 17 pour le diagnostic, de génotypage, et de criblage à haut débit, de contrôle de qualité, ou pour la détection de présence d'organismes génétiquement modifiés dans un produit.

**22.** Procédé pour la séparation, l'analyse et/ou l'identification d'espèces contenues dans un échantillon, **caractérisé en ce qu'**il comprend :

a) le remplissage du canal d'un appareil de séparation avec un milieu de séparation selon l'une des revendications 1 à 17,
b) l'introduction à une extrémité dudit canal dudit échantillon contenant lesdites espèces,

c) l'application d'un champ externe destiné à mouvoir certaines espèces contenues dans l'échantillon, et
d) la récupération desdites espèces ou la détection de leur passage à un endroit le long du canal, distinct du point d'introduction de l'échantillon.

## Claims

1. A liquid medium for analyzing, purifying or separating species inside a channel, and comprising at least one polymer composed of several polymer segments, said medium being non-thermosensitive and said polymer being of the irregular block copolymer type or irregular comb polymer type, having on average at least three junction points established between polymer segments of different chemical or topological nature, having an average molecular mass of greater than 50 000, and **characterized in that** all the segments of at least one type of chemical or topological nature forming part of its composition have a polydispersity of at least 1.5.

2. The medium according to claim 1, **characterized in that** the segments of each of the types of chemical or topological nature forming part of the composition of said polymer have a polydispersity of at least 1.5.

3. The medium according to claim 1 or 2 **characterized in that** said polydispersity is greater than 1.8.

4. The medium according to any one of the preceding claims, **characterized in that** said polymer has an average molecular mass of greater than 300 000.

5. The medium according to any one of claims 1 to 4, **characterized in that** said polymer shows specific affinity for the walls of said channel.

6. The medium according to claim 5, **characterized in that** said polymer has at least one type of polymer segments showing, within the separating medium, specific affinity for the wall, and at least one type of polymer segment showing in said medium less or no affinity for the wall.

7. The medium according to claim 5 or 6, **characterized in that** all the segments showing specific affinity for the wall represent between 2% and 80% by mass of the average total molar mass of said polymer.

8. The medium according to any one of the preceding claims, **characterized in that** the polymer shows specific affinity for one or more analytes.

9. The medium according to claim 8, **characterized in that** the polymer bears nucleotides or polypeptides of determined sequence.

10. The medium according to claim 8, **characterized in that** the polymer is combined with a protein, a protein fraction, a protein complex and/or an acidic or basic function.

11. The medium according to any one of the preceding claims, **characterized in that** all the polymer segments of at least one type of chemical or topological nature have on average a number of atoms of greater than 75, and preferably greater than 210, or have a molecular mass of greater than 1 500 and preferably greater than 4 500.

12. The medium according to any one of the preceding claims, **characterized in that** the various types of polymer segments of which said polymer is composed have on average an average number of atoms of greater than 75, and preferably greater than 210, or have a molecular mass of greater than 1 500 and preferably greater than 4 500.

13. The medium according to any one of the preceding claims, **characterized in that** the polymer has on average a number of junction points of between 4 and 100.

14. The medium according to any one of the preceding claims, **characterized in that** the polymer is a block copolymer containing on average at least four polymer segments.

15. The medium according to any one of the preceding claims, **characterized in that** the polymer is a comb polymer containing on average at least two side chains.

16. The medium according to any one of the preceding claims, **characterized in that** the polymer comprises at least one type of segment chosen from polyethers, polyesters such as polyglycolic acid, soluble random homopolymers and copolymers of the polyoxyalkylene type such as polyoxypropylene, polyoxybutylene, polyoxyethylene, polysaccharides, polyvinyl alcohol, polyvinylpyrrolidone, polyurethanes, polyamides, polysulfonamides, polysulfoxides, polyoxazoline, polystyrene sulfonate, and substituted or unsubstituted acrylamide, methacrylamide and allyl polymers and copolymers.

17. The medium according to any one of the preceding claims, **characterized in that** said polymer comprises at least one polymer chosen from:

- copolymers of the comb copolymer type, the skeleton of which is of dextran, acrylamide, acrylic acid, acryloylaminoethanol or (N,N)-dimethylacrylamide type and onto which are grafted side segments of acrylamide, substituted acrylamide or (N,N)-dimethylacrylamide (DMA) type, or of the DMA/allyl glycidyl ether (AGE) copolymer type, or of homopolymer or copolymer of oxazoline or of oxazoline derivatives;
- non-thermosensitive copolymers of the irregular sequential copolymer type having along their skeleton an alternation of segments of polyoxyethylene type and of segments of polyoxypropylene type, or an alternation of segments of polyoxyethylene type and of segments of polyoxybutylene type, or an alternation of segments of polyoxyethylene and of segments of polyether type that are more hydrophobic than polyoxyethylene;
- copolymers of the irregular sequential block copolymer type having along their skeleton an alternation of segments of acrylamide, acrylic acid, acryloylaminoethanol or dimethylacrylamide type, on the one hand, and segments of (N,N)-dimethylacrylamide (DMA) type, or of DMA/allyl glycidyl ether (AGE) copolymer type, or of homopolymer or copolymer of oxazoline or of oxazoline derivatives;
- polymers of the irregular comb polymer type, the skeleton of which is of the agarose, acrylamide, substituted acrylamide, acrylic acid, acryloylaminoethanol, dimethylacrylamide (DMA), or allyl glycidyl ether (AGE) polymer type, of DMA/AGE random copolymer type, of oxazoline and oxazoline derivative, of dextran, of methylcellulose, of hydroxylthylcellulose, of modified cellulose, of polysaccharide or of ether oxide type, and onto which are grafted side segments of agarose, acrylamide, substituted acrylamide, acrylic acid, acryloylaminoethanol, dimethylacrylamide (DMA), or allyl glycidyl ether (AGE) polymer type, of DMA/AGE random copolymer type, of oxazoline and oxazoline derivative, of dextran, of methylcellulose, of hydroxyethylcellulose, of modified cellulose, of polysaccharide or of ether oxide type;
- copolymers of the irregular comb copolymer type, the skeleton of which is of the acrylamide, substituted acrylamide, acrylic acid, acryloylaminoethanol, dimethylacrylamide (DMA), or allyl glycidyl ether (AGE) polymer type, of DMA/AGE random copolymer type, of oxazoline and oxazoline derivative, of dextran, of agarose, of methylcellulose, of hydroxyethylcellulose, of modified cellulose, of polysaccharide or of ether oxide type, and bears short-chain hydrophobic side segments such as alkyl chains, aromatic derivatives, fluoroalkyls, silanes or fluorosilanes.

18. An use of a medium according to any one of claims 1 to 17 for separating, purifying, filtering or analysing species chosen from molecular or macromolecular species, biological macromolecules of nucleic acid type, nucleic acid analogs obtained by synthesis, proteins, polypeptides, glycopeptides and polysaccharides, organic molecules, synthetic macromolecules or particles such as mineral particles, latices, cells or organelles.

19. The use according to claim 18 or an use of a medium according to any one of claims 1 to 17 in a channel of which at least one dimension is of submillimetric size.

20. The use according to claim 18 or 19, or an use of a medium according to any one of claims 1 to 17, for electrokinetic separations.

21. The use according to any one of claims 18 to 20, or an use of a medium according to any one of claims 1 to 17 for diagnosis, gene typing, and large-throughput screening, quality control, or for detecting the presence of genetically modified organisms in a product.

22. A process for separating, analyzing and/or identifying species contained in a sample, **characterized in that** it comprises:

a/ the filling of the channel, of a separating device with a separating medium according to any one of claims 1 to 17,
b/ the introduction of said sample containing said species into one end of said channel,
c/ the application of an external field intended to move certain species contained in the sample, and

d/ the recovery of said species or the detection of their passage at a point along the channel that is different from the point of introduction of the sample.

## Patentansprüche

1. Flüssiges Medium zur Analyse, Reinigung oder Trennung von Spezies in einem Kanal, die mindestens ein Polymer aus mehreren Polymersegmenten enthält, wobei dieses Medium nicht thermosensibel ist und das Polymer

   - vom Typ eines unregelmäßigen Block-Copolymers oder eines unregelmäßigen Kammpolymers ist;
   - über mindestens drei Bindungspunkte zwischen den Polymersegmenten verfügt, die von verschiedener chemischer oder topologischer Art sind;
   - eine mittlere Molekülmasse über 50.000 aufweist;

   **dadurch gekennzeichnet, dass**

   - die Gesamtheit der Segmente mindestens eines Typs chemischer oder topologischer Art, die in seine Zusammensetzung eintreten, eine Polymolekularität von mindestens 1,5 aufweisen.

2. Medium nach Anspruch 1, **dadurch gekennzeichnet, dass** die Segmente jedes der Typen chemischer oder topologischer Art, die in die Zusammensetzung des Polymers eintreten, eine Polymolekularität von mindestens 1,5 aufweisen.

3. Medium nach Anspruch 1 oder 2, **dadurch gekennzeichnet, dass** die Polymolekularität über 1,8 beträgt.

4. Medium nach einem der vorstehenden Ansprüche, **dadurch gekennzeichnet, dass** das Polymer eine mittlere Molekülmasse über 300.000 aufweist.

5. Medium nach einem der Ansprüche 1 bis 4, **dadurch gekennzeichnet, dass** das Polymer eine spezifische Affinität für die Wände des Kanals zeigt.

6. Medium nach Anspruch 5, **dadurch gekennzeichnet, dass** das Polymer über mindestens einen Polymersegmenttyp, der im Trennmedium eine spezifische Affinität zur Wand zeigt, und über mindestens einen Polymersegmenttyp verfügt, der im genannten Medium über weniger oder keine Affinität zur Wand verfügt.

7. Medium nach Anspruch 5 oder 6, **dadurch gekennzeichnet, dass** die Gesamtheit der Segmente, die eine spezifische Affinität zur Wand zeigen, zwischen 2 und 80 Massen% der gesamten mittleren Molekülmasse des Polymers ausmachen.

8. Medium nach einem der vorstehenden Ansprüche, **dadurch gekennzeichnet, dass** das Polymer eine spezifische Affinität zu einem oder mehreren Analyseobjekten zeigt.

9. Medium nach Anspruch 8, **dadurch gekennzeichnet, dass** das Polymer Träger von Nukleotiden oder Polypeptiden einer bestimmten Sequenz ist.

10. Medium nach Anspruch 8, **dadurch gekennzeichnet, dass** das Polymer einem Protein, einem Proteinbruchstück, einem Proteinkomplex und/oder einer Säure- oder Basefunktion zugeordnet ist.

11. Medium nach einem der vorstehenden Ansprüche, **dadurch gekennzeichnet, dass** die Gesamtheit der Polymersegmente mindestens eines Typs chemischer oder topologischer Natur im Mittel eine Atomzahl über 75, vorzugsweise über 210, aufweisen, oder sie eine Molekülmasse über 1.500, vorzugsweise über 4.500, aufweisen.

12. Medium nach einem der vorstehenden Ansprüche, **dadurch gekennzeichnet, dass** die verschiedenen Polymersegmenttypen, die das genannte Polymer bilden, eine mittlere Atomzahl über 75, vorzugsweise über 210, aufweisen, oder sie eine Molekülmasse über 1.500, vorzugsweise über 4.500, aufweisen.

13. Medium nach einem der vorstehenden Ansprüche, **dadurch gekennzeichnet, dass** das Polymer im Mittel über eine Anzahl von Bindungsstellen zwischen 4 und 100 verfügt.

14. Medium nach einem der vorstehenden Ansprüche, **dadurch gekennzeichnet, dass** das Polymer ein Block-Copolymer ist, das im Mittel über mindestens vier Polymersegmente verfügt.

**15.** Medium nach einem der vorstehenden Ansprüche, **dadurch gekennzeichnet, dass** das Polymer ein Kammpolymer ist, das im Mittel über mindestens zwei Seitenketten verfügt.

**16.** Medium nach einem der vorstehenden Ansprüche, **dadurch gekennzeichnet, dass** das Polymer über mindestens einen Segmenttyp verfügt, der aus Folgendem ausgewählt ist: Polyether, Polyester, wie Polyglykolsäure, lösliche Homopolymere und statistische Copolymere vom Polyalkylentyp, wie Polyoxypropylen, Polyoxybutylen, Polyoxyethylen, Polysaccharide, Polyvinylalkohol, Polyvinylpyrolidon, Polyurethane, Polyamide, Polysulfonamide, Polysulfoxide, Polyoxazolin, Polystyrensulfonat, Polymere und Copolymere von Acrylamiden, Methacrylamiden und Allylen, jeweils substituiert oder unsubstituiert.

**17.** Medium nach einem der vorstehenden Ansprüche, **dadurch gekennzeichnet, dass** das Polymer über mindestens ein aus Folgendem ausgewähltes Polymer verfügt:

- Copolymere vom Kammcopolymertyp, deren Skelett vom Dextran-, Acrylamid-, Acrylsäure-, Acryloylaminoethanol- oder (N,N)-Dimethylacrylamid-Typ ist und bei denen Seitensegmente vom folgenden Typ aufgepfropft sind: Acrylamid, substituiertes Acrylamid, (N,N)-Dimethylacrylamid (DMA) oder vom Typ eines Copolymers von DMA und Allylglycidylether (AGE) oder Homopolymer oder Copolymer von Oxazolin oder Oxazolinderivaten;
- nicht thermosensible Copolymere vom Copolymertyp mit unregelmäßiger Sequenz, die entlang ihrem Skelett abwechselnd Segmente vom Polyoxyethylen-Typ und Segmente vom Polyoxypropylen-Typ oder abwechselnd Segmente vom Polyoxyethylen-Typ und Segmente vom Polyoxybutylen-Typ oder abwechselnd Polyethylensegmente und Segmente vom Polyether-Typ zuzüglich Hydrophoben wie Polyoxyethylen zeigen;
- Copolymere vom Block-Copolymertyp mit unregelmäßiger Sequenz, die entlang ihrem Skelett abwechselnd einerseits Segmente vom Acrylamid-, Acrylsäure-Acryloylaminoethanol- oder Dimethylacrylamid-Typ sowie Segmente vom (N,N)-Dimethylacrylamid(DMA)-Typ oder vom Typ eines Copolymers von DMA und Alylglycidylether (AGE) oder eines Homopolymers oder eines Copolymers von Oxazolin oder Oxazolinderivaten zeigen;
- Polymere vom unregelmäßigen Kammpolymer-Typ, deren Skelett vom folgenden Polymertyp ist: Agarose, Acrylamid, substituiertes Acrylamid, Acrylsäure, Acryloylaminoethanol, Dimethylacrylamid (DMA), Allylglycidylether (AGE), statistisches Copolymer von DMA und AGE, Oxazolin, Oxazolinderivaten, Dextran, Methylcellulose, Hydroxyethylcellulose, modifizierte Cellulosen, Polysaccharide, Etheroxide; und bei denen Seitensegmente vom Folgenden Polymertyp aufgepfropft sind: Agarose, Acrylamid, substituiertes Acrylamid, Acrylsäure, Acryloylaminoethanol, Dimethylacrylamid (DMA), Allylglycidylether (AGE), statistisches Copolymer von DMA und AGE, Oxazolin, Oxazolinderivate, Dextran, Methylcellulose, Hydroxyethylcellulose, modifizierte Cellulosen, Polysaccharide, Etheroxide;
- Copolymere vom Typ unregelmäßiger Kammpolymere, deren Skelett vom folgenden Polymertyp ist: Acrylamid, substituiertes Acrylamid, Acrylsäure, Acryloylaminoethanol, Dimethylacrylamid (DMA), Allylglycidylether (AGE), statistisches Copolymer von DMA und AGE, Oxazolin, Oxazolinderivate, Dextran, Methylcellulose, Hydroxyethylcellulose, modifizierte Cellulosen, Polysaccharide, Etheroxide, und wobei dieses Skelett Träger hydrophober Seitensegmente mit kurzen Ketten, wie Alkylketten, aromatischen Derivaten, Fluoralkylen, Silanen, Fluorsilanen, ist.

**18.** Verwendung eines Mediums nach einem der Ansprüche 1 bis 17 zur Trennung, Reinigung, Filterung oder Analyse von Spezies, die unter den folgenden Spezies ausgewählt sind: Molekülen oder Makromolekülen, biologischen Makromolekülen vom Nukleinsäuretyp, deren synthetischen Analogen, Proteinen, Polypeptiden, Glykopeptiden und Polysacchariden, organischen Molekülen, synthetischen Makromolekülen oder Teilchen wie Mineralteilchen, Latexteilchen, Zellen oder Organellen.

**19.** Verwendung nach Anspruch 18 oder Verwendung eines Mediums nach einem der Ansprüche 1 bis 17 in einem Kanal, dessen Abmessung mindestens im Submillimeterbereich liegt.

**20.** Verwendung nach Anspruch 18 oder 19 oder Verwendung eines Mediums nach einem der Ansprüche 1 bis 17 für elektrokinetische Trennvorgänge.

**21.** Verwendung nach einem der Ansprüche 18 bis 20 oder Verwendung eines Mediums nach einem der Ansprüche 1 bis 17 zur Diagnose, zur Genotypfeststellung und zum Sieben mit hohem Durchsatz, zur Qualitätskontrolle oder zum Erkennen des Vorliegens genetisch modifizierter Organismen in einem Erzeugnis.

**22.** Verfahren zur Trennung, Analyse und/oder Identifizierung von in einer Probe enthaltenen Spezies, **dadurch gekennzeichnet, dass** es Folgendes beinhaltet:

a) das Füllen eines Kanals einer Trennvorrichtung mit einem Trennmedium nach einem der Ansprüche 1 bis 17;
b) das Einleiten der die Spezies enthaltenden Probe an einem Ende des Kanals;
c) das Anlegen eines externen Felds zum Bewegen bestimmter in der Probe enthaltener Spezies, und
d) das Rückgewinnen der Spezies oder das Erkennen ihres Durchlaufs an einer Stelle entlang dem Kanal, die vom Einleitungspunkt der Probe verschieden ist.

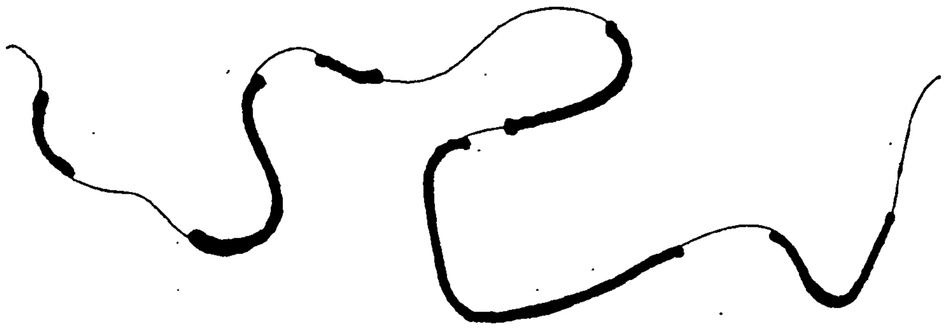

FIG.1a

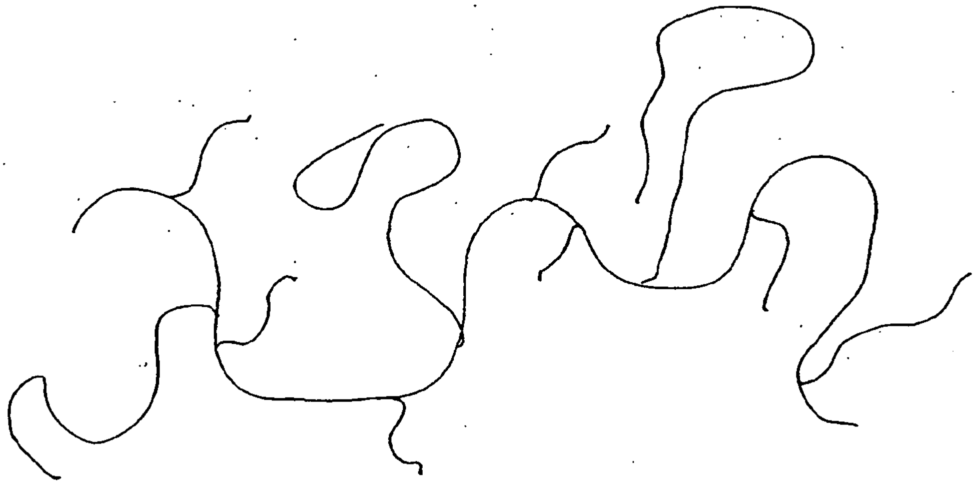

FIG.1b

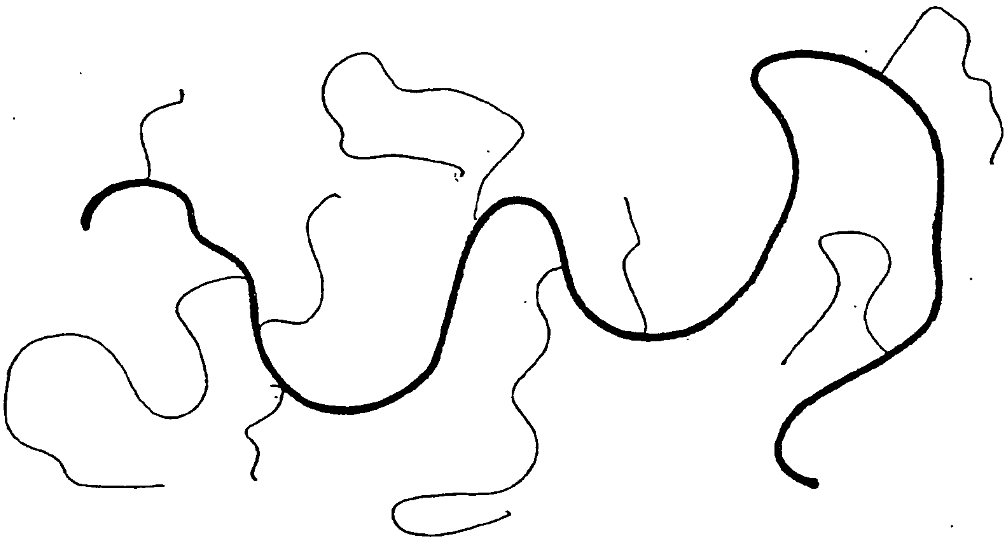

FIG.1c

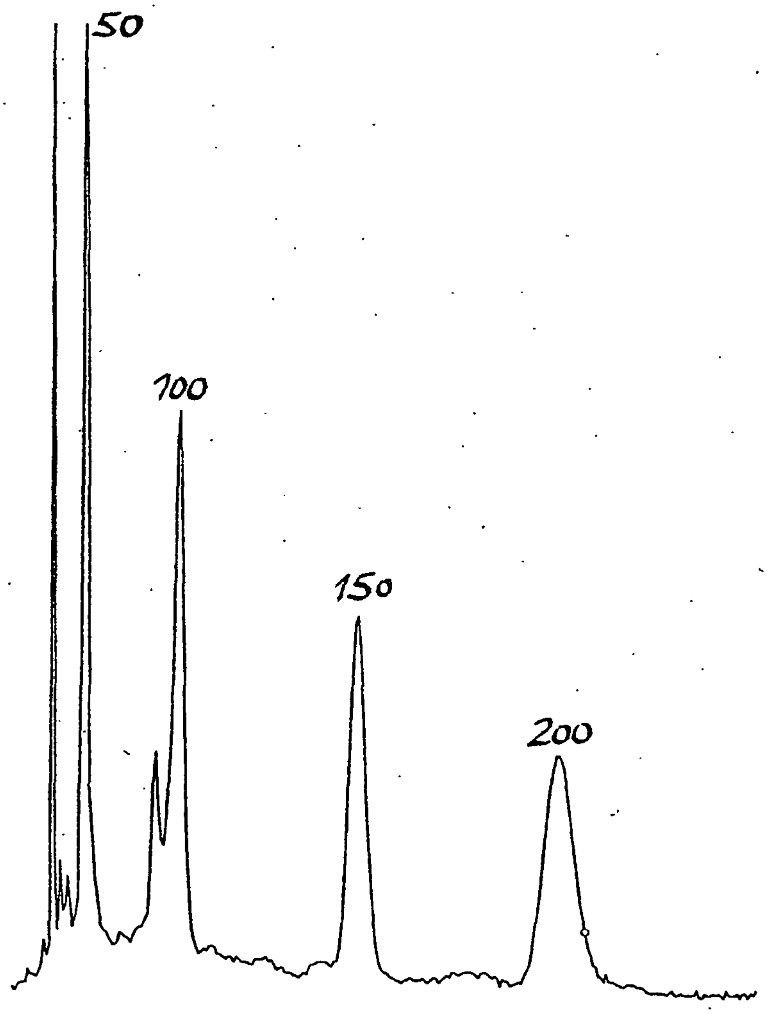


FIG.2

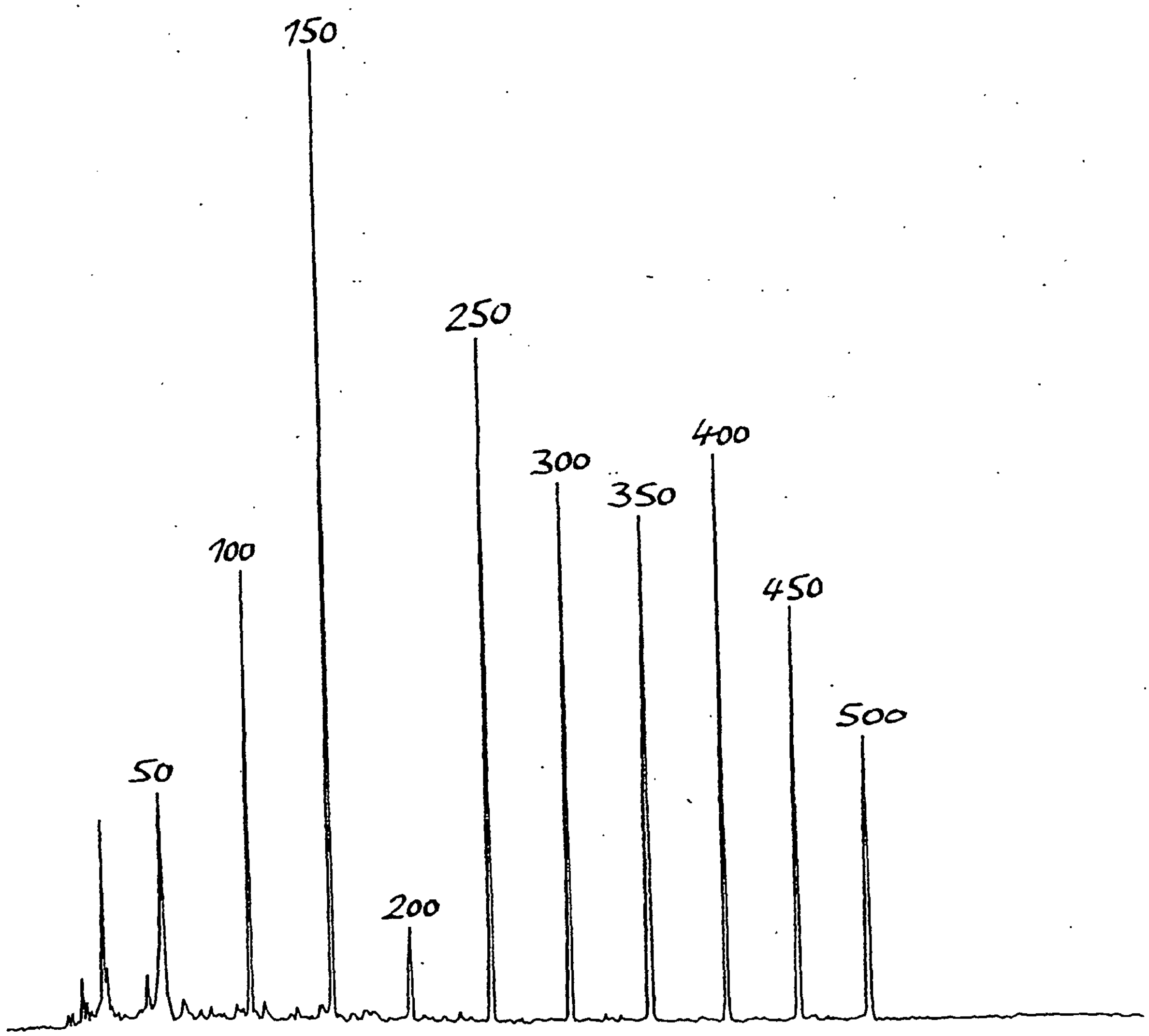


FIG.3

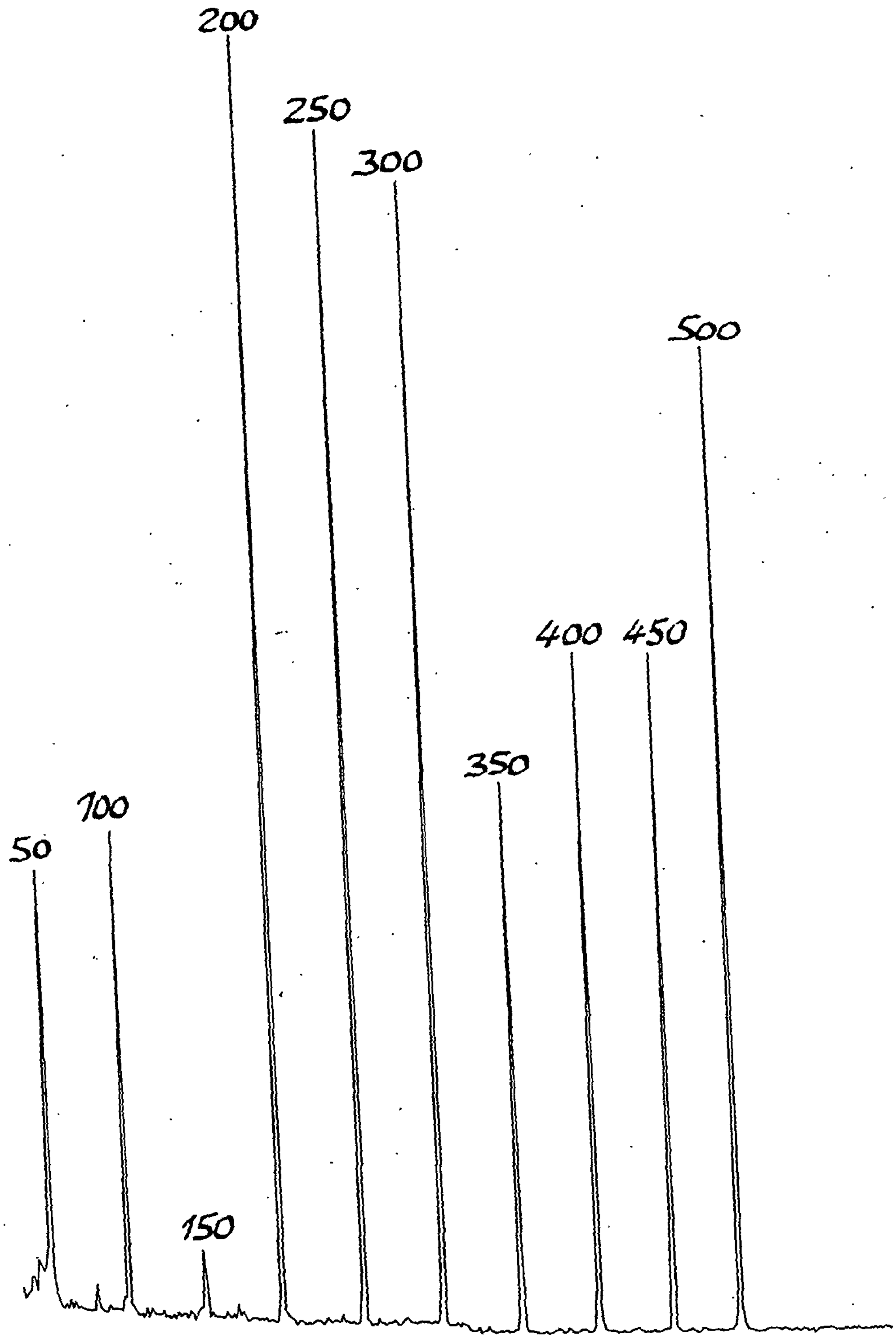


FIG.4

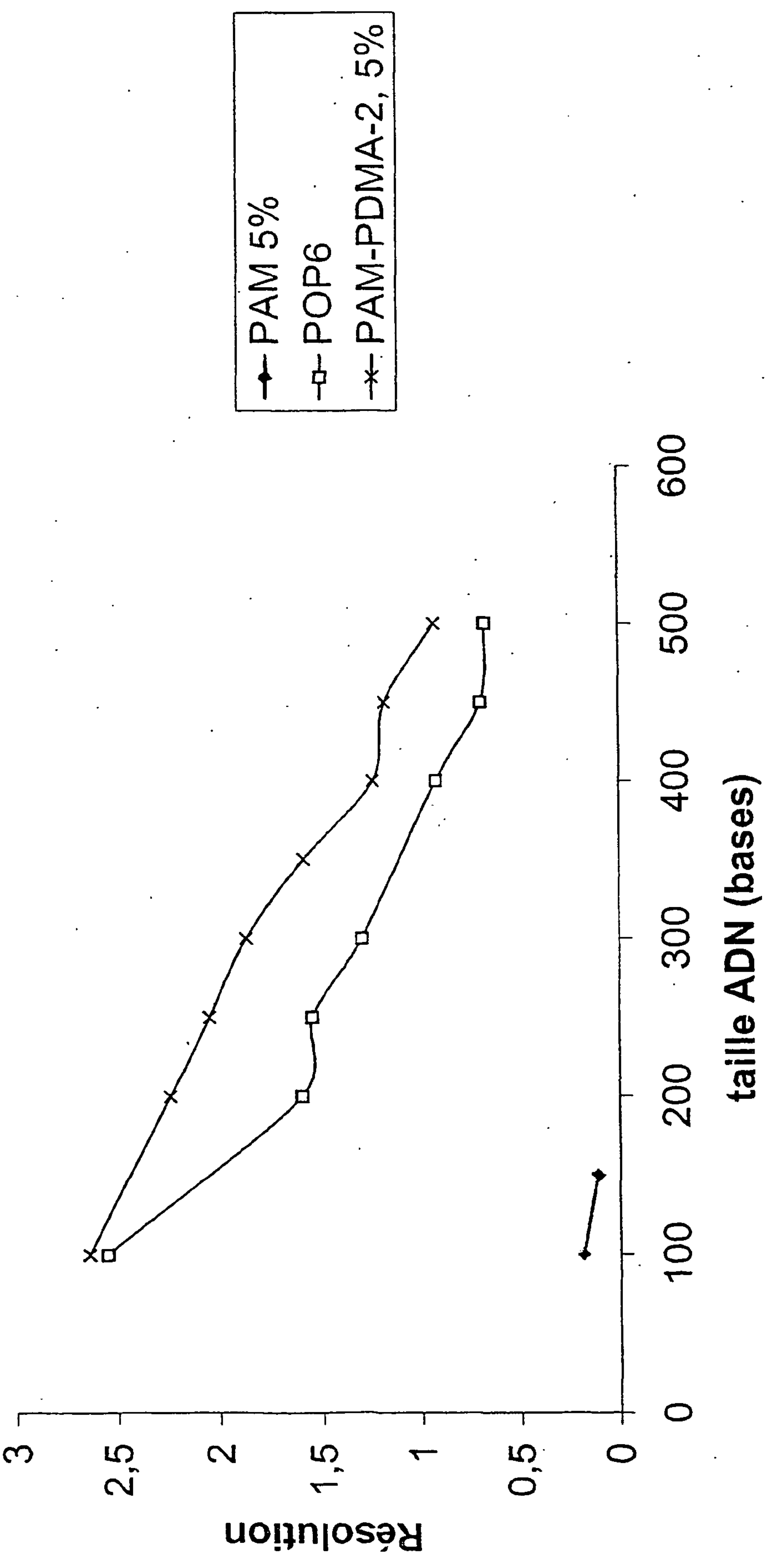

PAM 5%
POP6
PAM-PDMA-2, 5%
Résolution
3
2,5
2
1,5
1
0,5
0
100
200
300
400
500
600
taille ADN (bases)


*FIG.5*

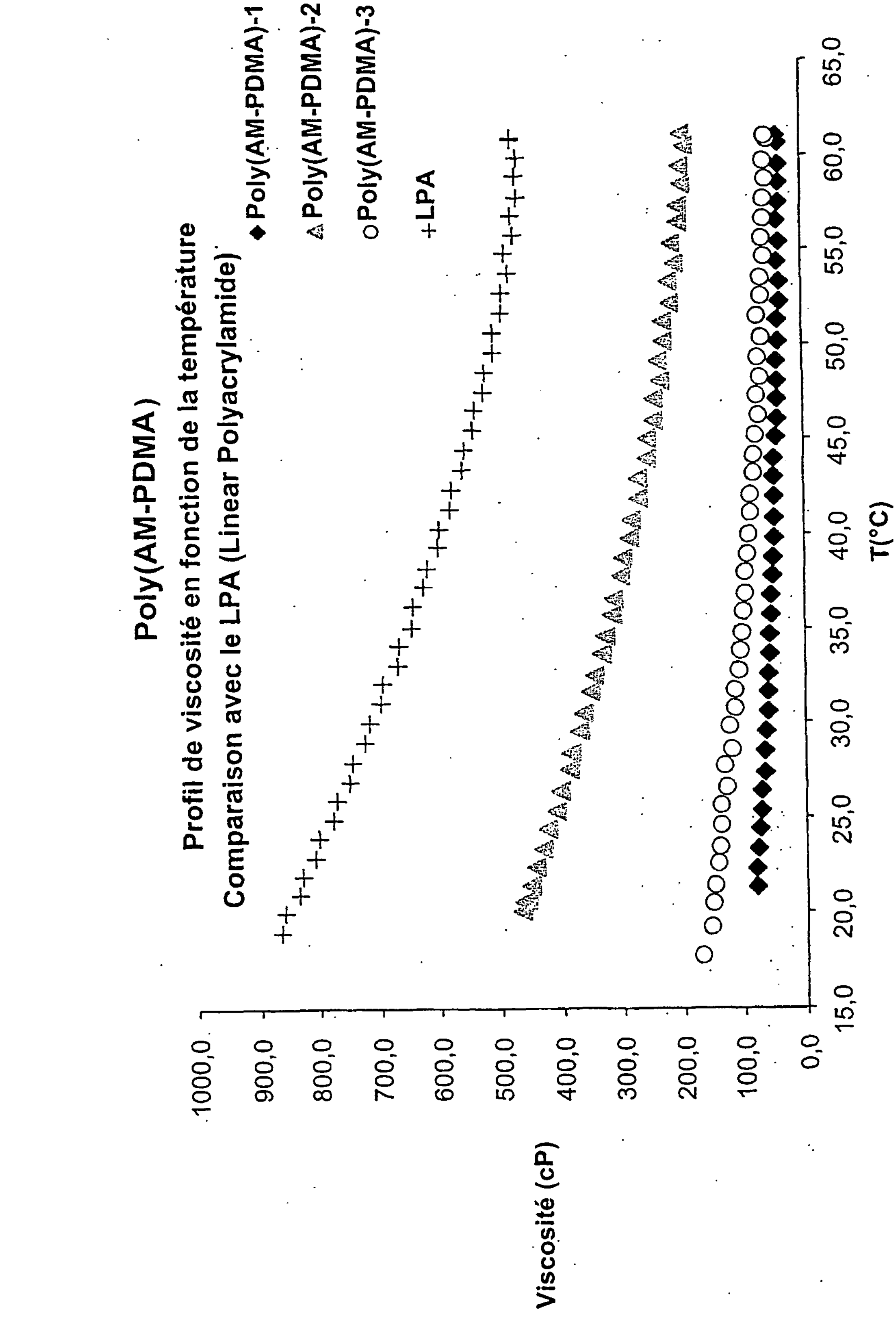
Poly(AM-PDMA)
Profil de viscosité en fonction de la température
Comparaison avec le LPA (Linear Polyacrylamide)
Poly(AM-PDMA)-1
Poly(AM-PDMA)-2
Poly(AM-PDMA)-3
LPA
Viscosité (cP)
1000,0
900,0
800,0
700,0
600,0
500,0
400,0
300,0
200,0
100,0
0,0
15,0
20,0
25,0
30,0
35,0
40,0
45,0
50,0
55,0
60,0
65,0
T(°C)

FIG.6

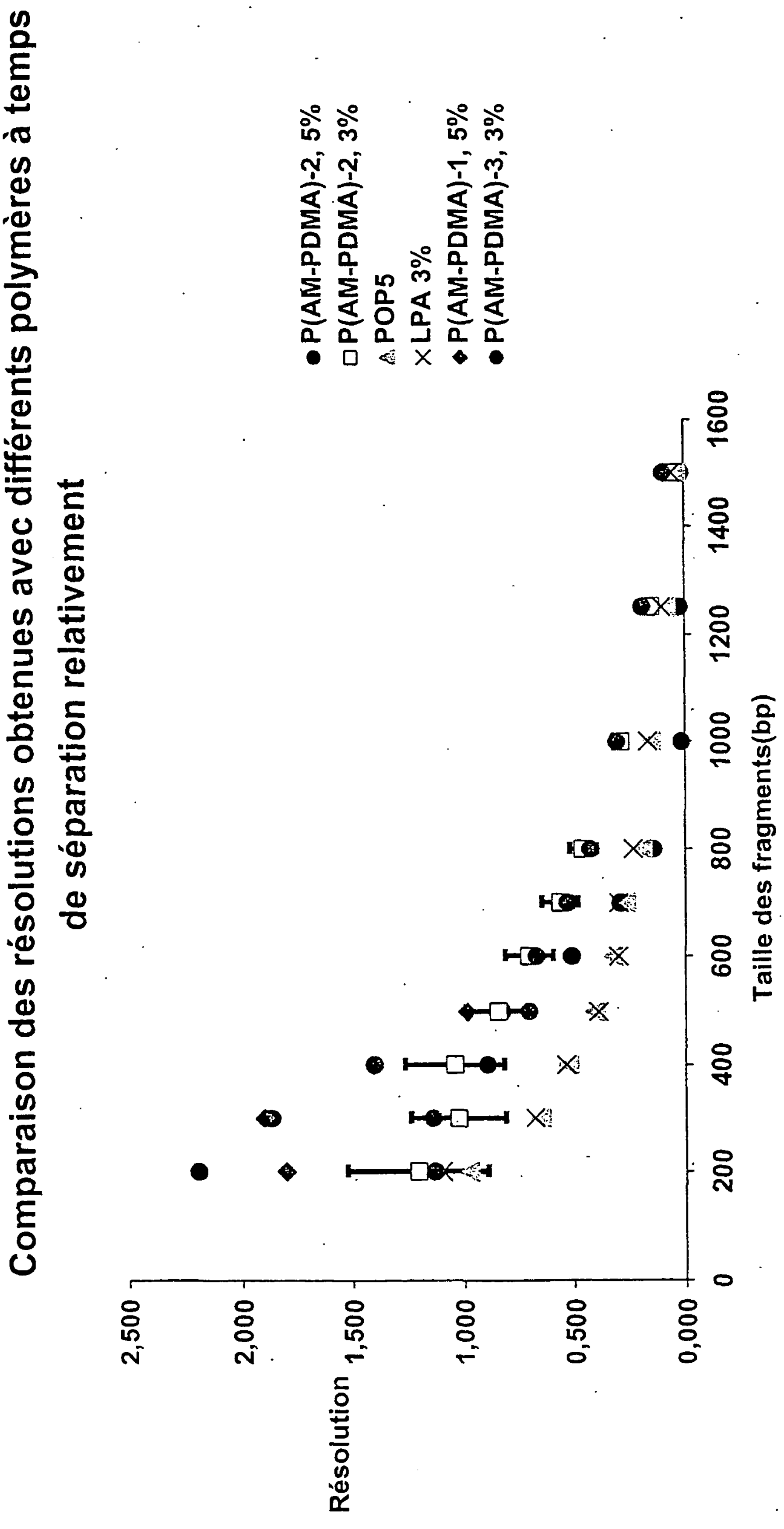
Comparaison des résolutions obtenues avec différents polymères à temps de séparation relativement
Résolution
2,500
2,000
1,500
1,000
0,500
0,000
0
200
400
600
800
1000
1200
1400
1600
Taille des fragments(bp)
P(AM-PDMA)-2, 5%
P(AM-PDMA)-2, 3%
POP5
LPA 3%
P(AM-PDMA)-1, 5%
P(AM-PDMA)-3, 3%

*FIG.7*